# EUROPÄISCHE PATENTSCHRIFT

(11) **EP 1 742 554 B1**
(45) Veröffentlichungstag und Bekanntmachung des Hinweises auf die Patenterteilung: **07.09.2011**
(21) Anmeldenummer: 05740228.1
(22) Anmeldetag: 16.04.2005
(51) Int. Cl.: A47C 20/04

(54) **ELEKTROMOTORISCHER LINEARANTRIEB**
ELECTROMOTIVE LINEAR DRIVE UNIT
ENTRAINEMENT LINEAIRE A MOTEUR ELECTRIQUE

(30) Priorität: 07.05.2004 DE 102004023245
(43) Veröffentlichungstag der Anmeldung: 17.01.2007
(73) Patentinhaber: Dewert Antriebs- und Systemtechnik GmbH, 32278 Kirchlengern (DE)
(72) Erfinder: ROITHER, Andreas, 32130 Enger (DE); BÜNTE, Mathias, 32108 Bad Salzuflen (DE); HANEBALL, Frank, 32839 Steinheim (DE); TOTH, Laszlo, 32609 Hüllhorst (DE); MÜLLER, Christian, 32839 Steinheim (DE)
(74) Vertreter: Dantz, Jan Henning
(86) Internationale Anmeldenummer: PCT/EP2005/004065
(87) Internationale Veröffentlichungsnummer: WO 2005/112709

(56) Entgegenhaltungen:
- DE-A1- 19 603 539
- DE-A1- 19 921 300
- DE-U1- 20 013 669
- DE-U1-202004 007 549
- US-A1- 2002 036 421
- US-B1- 6 300 732

## Beschreibung

Die Erfindung betrifft einen elektromotorischen Linearantrieb für die verstellbaren Bauteile eines Möbels, mit einem Gehäuse, bei dem beabstandete Gehäusewandungen mit fluchtenden Ausnehmungen zur Aufnahme der Achse eines beweglichen Möbelbauteils versehen sind, und mit einem die Ausnehmungen abdeckenden Schließer, der zur Sicherung der Achse an den zugehörigen Rändern der Gehäusewandungen festgelegt ist, mit einem Antriebsmotor, einem mit dem Antriebsmotor gekoppelten Drehzahlreduziergetriebe mit einem rotierenden Abtriebsglied zum Antrieb von mindestens einem linear verfahrbaren Stellglied, welches zur Umsetzung seiner linearen Bewegung in eine Drehbewegung der Achse auf einen an dieser festgesetzten Anlenkhebel einwirkt.

Der in Rede stehende elektromotorische Linearantrieb ist in vielen Ausführungen bekannt. Ein derartiger Linearantrieb ist beispielsweise aus dem US 6300732 B1 bekannt. Es handelt sich um einen sogenannten Einzelantrieb mit einem Antriebsmotor und einem Stellglied. Mittels dieses elektromotorischen Linearantriebes kann bevorzugt die ortsfest, jedoch drehbar gelagerte Welle der Rückenlehne oder des Fußteiles eines Lattenrostes verstellt werden. Es handelt sich um Massenartikel, die möglichst preiswert angeboten werden sollen. Es sind deshalb möglichst viele Bauteile aus Kunststoff im Spritzgussverfahren gefertigt. Da das Drehzahlreduziergetriebe üblicherweise ein Schneckentrieb ist, besteht die Schnecke aus Stahl oder aber der Abtriebszapfen des Antriebsmotors ist als Schnecke ausgebildet. Das damit in Eingriff stehende Schneckenrad ist aus einem Kunststoff gefertigt. Üblicherweise ist auch das Gehäuse ein Kunststoffgehäuse. Bei den bislang bekannten Linearantrieben treibt das Schneckenrad eine Spindel an, die üblicherweise auch aus Stahl gefertigt ist, da derartige Spindeln als Normteile handelsüblich zu beziehen sind. Auf die Spindel ist eine Spindelmutter aufgesetzt, die gegen Drehung gesichert ist, so dass sie sich bei Drehung der Spindel in Abhängigkeit von der Drehrichtung in deren Längsrichtung bewegt. Diese aus Kunststoff gefertigte Spindelmutter drückt gegen den Anlenkhebel, der aus Stahl besteht. Die Endstellungen der Spindelmutter sind üblicherweise durch zwei Endschalter vorbestimmt. Derartige Antriebe sollten insbesondere beim Einsatz in Verbindung mit einem Lattenrost möglichst kompakt sein, da der Hersteller eines Lattenrostes diese Linearantriebe an das Lattenrost montiert. Außerdem sollte die für das Stapeln notwendige Höhe eines Lattenrostes so gering wie möglich sein, da dadurch eine raumsparende Lagerung und ein raumsparender Transport möglich ist.

Bei den bisher bekannten Ausführungen mit einer Spindel und einer aufgesetzten Spindelmutter ist die Länge des Linearantriebes relativ groß, wobei unter der Länge des Linearantriebes der Abstand von einem Ende zum gegenüberliegenden Ende verstanden wird, wobei die gedachte Verbindung quer zur Motordrehachse verläuft.

Der Erfindung liegt die Aufgabe zugrunde, einen elektromotorischen Linearantrieb der eingangs näher beschriebenen Art so auszulegen, dass bei geringst möglichen Abmessungen und einer geringst möglichen Anzahl von Bauteilen die volle Funktion gewährleistet ist.

Die gestellte Aufgabe wird gelöst, indem das Abtriebsglied des Drehzahlreduziergetriebes ein Zahn- oder Schneckenrad ist, welches mit einer zentrischen Innengewindebohrung versehen ist, und dass das Stellglied eine mit dem Zahn oder Schneckenrad in Eingriff stehende, gegen Drehung gesicherte und ausschließlich in ihrer Längsrichtung verfahrbare Stellspindel ist, die mit dem Anlenkhebel in Wirkverbindung steht.
Im Gegensatz zu den bekannten Ausführungen ist nunmehr das Zahn- oder Schneckenrad des Drehzahlreduziergetriebes mit einer zentrischen Innengewindebohrung versehen, die mit der das Stellglied bildenden Spindel in Eingriff steht. Bei Drehung des Zahn- oder Schneckenrades verfährt demzufolge die Spindel gegenüber dem Zahn- oder Schneckenrad und zwar ist die Richtung von der Drehrichtung des Zahn- oder Schneckenrades abhängig. Da die Stellspindel direkt oder indirekt mit dem Anlenkhebel in der Wirkverbindung steht, entfällt nicht nur die Spindelmutter, sondern die Länge des Gehäuses wird gegenüber den bekannten Ausführungen deutlich reduziert, da sich gegenüber den bekannten Ausführungen nunmehr die Stellspindel zu beiden Seiten des Zahn- oder Schneckenrades befindet. Durch die geringeren Abmessungen des Gehäuses wird auch Material gespart, so dass insgesamt die Herstellkosten verringert werden. Die Verstellgeschwindigkeit des angeschlossenen Möbelbauteiles verringert sich nicht, da die Stellspindel von der Steigung der Gewindegänge so ausgelegt werden kann, dass die gleiche Geschwindigkeit erreicht wird, die die Spindelmutter bei den vorbekannten Antrieben erreicht.

In weiterer Ausgestaltung ist vorgesehen, dass der Schließer in Längsrichtung der Achse in Führungen der Gehäusewandungen verschiebbar und in der Endstellung quer zur Achse formschlüssig mit den oberen Rändern der Gehäusewandungen verbunden ist.

Der Schließer wird nunmehr quer zur Gehäuselängsachse bewegt, wodurch die Abtragung der Kräfte günstiger ist als bei den bislang bekannten Linearantrieben. Bei den in Rede stehenden Linearantrieben wirken die Kräfte aufgrund der Konfiguration der Antriebsanordnung in der Längsrichtung des Gehäuses und demzufolge quer zur Bewegungsrichtung der Schließer. Bei den bekannten Linearantrieben ist der Schließer immer als ein kritisches Teil des Antriebes zu sehen. Die auf den Schließer einwirkenden Kräfte können bei dem erfindungsgemäßen Linearantrieb über die Kontaktflächen zwischen dem Schließer und den Gehäusewandungen abgetragen werden.

Eine formschlüssige Verbindung zwischen dem Schließer und den Gehäusewandungen wird erreicht, indem in jeder Gehäusewandung wenigstens zwei hinterschnittene Nuten vorgesehen sind und dass diese hinterschnittenen Nuten der Gehäusewandungen fluchtend zu den Nuten der gegenüberliegenden Gehäusewandung stehen. Da es sich um Kunststoffteile handelt, lässt sich diese Gestaltung durch Auslegung des Spritzgusswerkzeuges bzw. der Spritzgusswerkzeuge erreichen. Damit eine ausreichende Führung und eine zulässige Flächenpressung erreicht wird, ist vorgesehen, dass in jeder Gehäusewand beidseits der fluchtenden Ausnehmungen jeweils zwei Nuten vorgesehen sind, von denen wenigstens die der Ausnehmung zugewandt liegende hinterschnitten ist. Der Schließer ist zu seiner formschlüssigen Festlegung mit in die Nuten der Gehäusewandungen eingreifenden Sicherungsstegen ausgerüstet. Diese Sicherungsstege erstrecken sich in vorteilhafterweise von einer Längsseite bis zur gegenüberliegenden Längsseite, da dadurch das Einschieben des Schließers von der Seite her erleichtert wird. Weiterhin kann der Schließer im Bereich seiner Außenkanten mit Sicherungen ausgestattet sein, welche ein unbeabsichtigtes Verschieben des Schließers verhindern. Diese Sicherungen können aus angeformten Stegen, Wulsten, zusätzlich mit dem Schließer vereinte Bauteile oder deren Kombinationen bestehen, die nach dem Einbringen des Schließers in seine Endlage sich hinter oder in eine Gehäusekante kraft- und/oder formschlüssig erstrecken. Zweckmäßigerweise ist zur Stabilisierung der Schließer an der freien Außenseite mit in seiner Längsrichtung verlaufenden Längsrippen versehen, die sich durch die Außenseite nach innen erstrecken können. Da der Schließer vornehmlich eine Biegebelastung erfährt, sind möglichst hohe Längs- und Querrippen sinnvoll, die sich über die gesamte Höhe des Schließers erstrecken können. Um ein unbeabsichtigtes Verschieben des Schließers zu verhindern, ist vorgesehen, dass der Schließer angeformte oder eingebrachte Abschnitte aufweist, die kraft- und/oder formschlüssig in das Gehäuse eingreifen oder an das Gehäuse angreifen. Weiterhin könnte diese Sicherung auch im Gehäuse untergebracht sein. Dazu kann es zweckmäßig sein, dass das Sicherungselement nach der Montage des Linearantriebes zwischen den Gehäuseteilen gehalten wird, während ein freies Ende der Sicherung federnd oder rastend in eine Ausnehmung des Schließers eingreift und diesen vor unbeabsichtigtes Verschieben sichert.

Das Gehäuse des in Rede stehenden elektromotorischen Linearantriebes ist in bekannterweise aus einem Kunststoff gefertigt und besteht aus zwei Gehäusehälften, deren Stoßflächen quer zur Drehachse des Motors liegen. Dadurch ergibt sich eine günstige Montage der im Inneren angeordneten Bauteile, da die Gehäusehälften dann in der Montagestellung so stehen, dass sie nach oben hin offen sind, so dass auch für Montageroboter der benötigte Raum gegeben ist. Die im Inneren der Gehäusehälften angeordneten Bauteile sind vorzugsweise ohne mechanische Verbindungselemente durch eine entsprechende Gestaltung der Gehäusehälften gesichert, so dass auf mechanische Verbindungselemente verzichtet werden kann. Da die entstehenden Kräfte über die Gehäusehälften abgetragen werden, ist vorgesehen, dass die Stoßflächen der Gehäusehälften profiliert, verzahnt oder ähnlich gestaltet sind, und dass die Stoßflächen ineinander greifen. Alternativ dazu können die Schraubdome ringförmige Zapfen, Stege oder Ausnehmungen aufweisen, die konzentrisch und mehrfach um die Befestigungsschrauben angeordnet sind. Es ist jedoch auch möglich, dass die Gehäusehälften ringförmige Zapfen, Stege oder Ausnehmungen aufweisen, die konzentrisch zueinander und um die Befestigungsschrauben verlaufen, so dass sich diese beim Anziehen der Schrauben ineinandersetzen. Bei der Montage der beiden Gehäusehälften greifen diese Zapfen, Stege oder Ausnehmungen ineinander und werden durch das Festziehen der jeweilige Schraube fest ineinander gedrückt, so dass die Gehäusehälften formschlüssig und gegen einander unverschiebbar fixiert sind. Dadurch ist eine, wenn auch nur geringfügige Verschiebung der beiden Gehäusehälften gegeneinander wirksam verhindert. Damit die Wanddicken der Gehäusehälften so gering wie möglich sein können, ist vorgesehen, dass sie zur Reduzierung der Wanddicken durch Fasern, vorzugsweise durch Glasfasern verstärkt sind.

Für die Funktion des elektromotorischen Linearantriebes könnte die Spindel beim Einfahren, das heißt beim Absenken des angeschlossenen Möbelbauteils auch frei aus dem Gehäuse herausfahren bzw. herausragen. Sie würde jedoch dann den Umwelteinflüssen, beispielsweise einer Staubbelastung ausgesetzt sein. Es ist deshalb vorgesehen, dass das Gehäuse an der dem Anlenkhebel abgewandten Seite mit einer Abdeckkappe versehen ist, in die die Spindel in der eingefahrenen Stellung einliegt. Diese Abdeckkappe könnte an das Gehäuse rastend angesetzt oder damit verschraubt sein, es ist jedoch vorteilhaft, wenn die Abdeckkappe mit dem Gehäuse ein einstückiges Formteil bildet. Damit sich das Gehäuse bzw. der elektromotorische Linearantrieb bei eingeschaltetem Antriebsmotor zum Verstellen des angeschlossenen Möbelbauteiles sich nicht verdreht, ist vorgesehen, dass das Gehäuse an der dem Antriebsmotor zugewandten Seite zur Bildung einer Drehmomentstütze mit einer Öffnung oder einer Aussparung versehen ist. Es ist vorteilhaft, wenn die Öffnung oder die Aussparung der Drehmomentstütze durch ein Bauteil oder durch einen Verschlussmechanismus in ihrer Weite veränderbar ist oder dass die Öffnung durch einen weiteren Schließer abdeckbar ist. Die Querschnittsform dieser Öffnung oder der Aussparung ist an das Bauteil angepasst, und vorzugsweise entweder kreisrund oder halbkreisförmig gestaltet. Die offene Ausführung bietet den Vorteil, dass der Linearantrieb sinngemäß an das die Stütze bildende Bauteil angesteckt werden kann.

Damit das Gehäuse zur Abtragung der Kräfte eine ausreichende Stabilität aufweist ist vorgesehen, dass es mit sich kreuzenden Verstärkungsrippen versehen ist. Damit das Gehäuse eine ansprechende Form erhält, ist vorgesehen, dass es außen glattflächig und das die sich kreuzenden Verstärkungsrippen innen angeordnet sind.

Zumindest die an die Ausnehmungen angrenzenden Rippen können konzentrisch zu diesen verlaufen. Die sich kreuzenden bzw. auf die Ausnehmungen gerichteten Rippen verlaufen zunächst parallel und im Abstand zum oberen Rand der Gehäusehälfte und anschließend unter einem spitzen Winkel. Damit die Bewegung des Anlenkhebels zwecks Anheben des Möbelbauteiles nicht behindert wird, ist vorgesehen, dass dieser Bewegungsbereich frei von Verstärkungsrippen ist. Dazu kann es zweckmäßig sein, dass in unmittelbarer Nähe dieses Gehäusebereiches die Außenwand des Gehäuses nach außen verspringt, nach außen gewölbt ist oder sogar beide Merkmale aufweist. Somit können auf der inneren Seite des Gehäuses die Verrippungen noch ausgeprägter gestaltet sein, so dass eine gezielte Versteifung des Gehäuses an extrem belasteten Zonen geschaffen ist.

Je nach Einsatz des elektromotorischen Linearantriebes kann die Spindel aus Stahl oder aus einem Kunststoff bestehen. Sofern sie aus einem Kunststoff besteht, ist auf den dem Anlenkhebel zugewandten Endbereich ein Druckklotz fest aufgesetzt, damit der Endbereich der Spindel sich nicht verformt. Dieser Druckklotz ist zweckmäßigerweise auch aus einem Kunststoff gefertigt, bildet vorzugsweise mit der Spindel ein Formteil und ist mit einer metallischen Verstärkungseinlage ausgestattet. Diese metallische Verstärkungseinlage kann innerhalb des Klotzes liegen, so dass bei der Fertigung das metallische Verstärkungsteil umspritzt wird, es kann jedoch auch an der dem Anlenkhebel zugewandten Seite an den Kunststoffklotz angesetzt sein, bei entsprechender Gestaltung des Kunststoffklotzes auch damit verrastet sein. Die metallische Verstärkungseinlage könnte auch nach Art einer Klammer ausgebildet sein. Sofern die Spindel aus Stahl besteht, kann ein Druckklotz aus Stahl oder einem Kunststoff formschlüssig oder stoffschlüssig mit der Spindel verbunden sein. Weiterhin kann die Kontaktfläche zwischen dem Druckklotz und dem Anlenkhebel in einem rechten Winkel zur Mittellängsachse der Spindel stehen oder um einen relativ geringen spitzen Winkel schräggestellt sein, wobei dieser Winkel beispielsweise zwischen 5° und 20° liegen kann. Der Anlenkhebel ist üblicherweise aus Stahl. Die Werkstoffpaarung ist normalerweise ungünstig, kann jedoch beim vorliegenden Einsatzfall durchaus praktikabel sein, da die Verstellgeschwindigkeit der Spindel relativ gering ist. Der Druckklotz oder die Verstärkungseinlage könnte zumindest abschnittsweise aus einem gehärteten Stahl bestehen. Somit kann der Verschleiß zwischen diesem Bauteil und dem Anlenkhebel minimiert werden. Zusätzlich könnte zumindest die Oberfläche des Anlenkhebels im Kontaktbereich zu dem Druckklotz bzw. der Verstärkungseinlage ebenfalls gehärtet sein. Weiterhin kann anstelle des Druckklotzes bzw. der Verstärkungseinlage aus Stahl ein anderer Werkstoff Verwendung finden, der aus seinen Eigenschaften heraus bereits härter als Stahl ist. Denkbar wären Hartmetalle oder Keramiken.

Der aus Metall bestehende Anlenkhebel ist in bevorzugter Ausführung winkelförmig ausgebildet. Dabei kann er als Stanzteil aus einem Stahl oder als Stahlgussteil mit planparallelen Seitenflächen gestaltet sein. Aufgrund der Werkstoffkombination der Reibung Stahl auf Stahl ist zur Vermeidung von störenden Geräuschen vorgesehen, dass die dem Anlenkhebel zugewandte Kontaktfläche bogenförmig oder halbkreisförmig verläuft. Um die Anzahl der verwendeten Bauteil so gering wie möglich zu halten, ist bekannt, dass ein bogenförmiger Abschnitt des Anlenkhebels direkt das Abtriebsglied des linearen Antriebszuges linienförmig kontaktiert, und dass der bogenförmige Abschnitt des Anlenkhebels vor der Stirnseite des linear verfahrbaren Abtriebsgliedes reibt. Diese Linienberührung verursacht hohe Kontaktkräfte, so dass ein Verschleiß denkbar hoch ausfallen könnte. Eine weitere Ausführungsform sieht jedoch vor, dass zwischen dem bogenförmigen Abschnitt des Anlenkhebels und der Reibfläche des linearen Abtriebsgliedes ein nach Art eines Gleitschuhes angeordnete Druckplatte angeordnet ist. Dabei weist die Druckplatte auf der dem Anlenkhebel zugewandten Seite eine kreisrunde Mulde auf, die mit einem kreisrunden Bogenabschnitt des Anlenkhebels in Verbindung steht. Auf der der Mulde gegenüberliegenden Seite weist die Druckplatte eine ebene Fläche auf, die mit der Fläche des linearen Abtriebsgliedes in Verbindung steht. Bei Betrieb des Linearantriebes reibt somit der bogenförmige Abschnitt des Anlenkhebels in der Mulde der Druckplatte und die ebene Fläche der Druckplatte reibt vor der Kontaktfläche mit dem linearen Abtriebsglied. Durch dieses zusätzliche Bauteil ist ein eingangs näher beschriebene Linienberührung nun ein eine Flächeberührung umgewandelt worden, wobei die Kräfte nun auf eine deutlich größere Fläche verteilt werden.

Zur vereinfachten Montage des elektromotorischen Linearantriebes, beispielsweise in einem Möbel, kann es zweckmäßig sein, dass die Druckplatte an Stegen des linearen Abtriebsgliedes gehalten wird. Andererseits kann die Druckplatte auch an dem Anlenkhebel steckbar oder fest angesetzt sein, so dass eine Art Gelenk zwischen dem Anlenkhebel und der Druckplatte, beispielsweise durch muldenförmige Ausnehmungen, gegeben ist.

Die Lagerung des Schneckenrades erfolgt zweckmäßigerweise mittels eines Wälzlagers, welches in einen als Formteil ausgebildeten Getriebewinkel eingesetzt ist, der zur Verbindung mit dem Gehäuse des Antriebsmotors verschraubt ist. Der Getriebewinkel besteht demzufolge aus einer Hülse und einem damit verbundenen Befestigungsflansch. Der Getriebewinkel ist zur einfachen Herstellung als ein Kunststoffformteil ausgebildet und durch Fasern, vorzugsweise durch Glasfasern verstärkt.

Zur Optimierung der Reibpartner, zum einen zwischen der Motorwelle und dem Schneckenrad und zum anderen zwischen dem Schneckenrad und der Spindel, ist vorgesehen, dass das Schneckenrad zweiteilig ausgebildet ist und aus einem Außenkranz und einer darin eingreifenden Trägerhülse besteht, die mit dem Innengewinde und außen mit einem Lagersitz versehen ist. Dabei bestehen die Bauteile aus unterschiedlichen Werkstoffen. Dadurch wird es insbesondere möglich, dass für die Lagerung des Schneckenrades und der Spindel nur ein Wälzlager erforderlich ist. Der Außenkranz ist zweckmäßigerweise mit der Trägerhülse formschlüssig verbunden. Dies erfolgt beispielsweise durch Stege, die in Nuten des anderen Bauteiles eingreifen. Entgegen dieser Ausführung ist es jedoch auch möglich, dass das Schneckenrad mit dem Innengewinde und dem äußeren Lagersitz für das Wälzlager als ein einstückiges Formteil aus einem Kunststoff besteht. Dadurch wird die Anzahl der Bauteile minimiert.

Die in Rede stehenden Linearantriebe sind vorzugsweise durch die Auslegung der Spindel und im vorliegenden Falle durch das Innengewinde selbsthemmend, das heißt, bei abgeschaltetem Antriebsmotor verbleibt das angeschlossene Bauteil in der jeweiligen Stellung. Zur Erhöhung der Verstellgeschwindigkeit werden jedoch Spindeln mit einer größeren Steigung gefordert, so dass die Linearantriebe nicht mehr selbsthemmend sind. Es ist deshalb in weiterer Ausgestaltung vorgesehen, dass der Linearantrieb mit einem in einer Bewegungsrichtung der Spindel wirkenden Bremselement versehen ist, welches zwischen einem rotierenden und einem feststehenden Bauteil montiert ist. Dieses Bremselement ist in bevorzugter Ausführung ein Federbremselement welches mit mehreren Windungen ausgestattet ist, und wobei ein Ende der Windung in der Hülse des Getriebewinkels festgelegt und das Federbremselement ansonsten auf dem Lagersitz des Schneckenrades angeordnet ist oder dass das Federbremselement mit seinen freien Windungen um einen zylindrischen Ansatz geschlungen ist.

Bei einer Ausführung, bei der die Spindel aus Stahl gefertigt ist, könnte anstelle des Druckklotzes das dem Antriebsmotor abgewandte Ende der Spindel auf ein Gleitstück wirken, welches verschiebbar im Gehäuse geführt ist und auf den Anlenkhebel wirkt. Dieses Gleitstück könnte in einer Ausführung aus einem Kunststoff gefertigt sein, so dass die Werkstoffkombination zwischen dem zu verschwenkenden Anlenkhebel und dem Gleitstück passen würde. Dabei könnte die Stirnfläche der Spindel rechtwinklig zur Mittellängsachse der Spindel stehen oder unter einem Winkel, beispielsweise gegenüber der Vertikalen, wodurch die Kraftübertragung auf den Anlenkhebel optimiert wäre. Da man bestrebt ist, die in Rede stehenden Linearantriebe mittels Montageautomaten zu montieren, so dass möglichst wenige mechanische Befestigungselemente notwendig werden, ist vorgesehen, dass in den Gehäusehälften quer zur Mittellängsachse der Spindel stehende Stege angeformt sind, die Anlaufkanten bilden und gegen die sich das Schneckenrad des Getriebewinkels abstützt. Wenn der elektromotorische Linearantrieb das-Möbelbauteil entgegen der Schwerkraft verstellt, so findet dies in seiner Hauptlastrichtung statt. Die Rückstellung des Möbels kann durch die Schwerkraft selbst erfolgen. Dabei kann es vorkommen, dass die zuvor genannte Anlaufkante das Getriebe oder ein Getriebebauteil gegen Verschiebung stützt. Sofern die Spindel mit einem auf den Anlenkhebel wirkenden Druckstücks versehen ist, könnte dies stufenförmig ausgebildet sein, wobei die Stufenfläche an der dem Anlenkhebel zugewandten Seite liegt, so dass sich ein flächiger Kontakt zwischen der Seitenfläche des Anlenkhebels und der die Stufe bildenden Fläche ergibt.

Das Gehäuse sollte so ausgelegt sein, dass der Antriebsmotor mit dem angeflanschten Getriebewinkel und dem Schneckenrad sowie dem Wälzlager als Einheit darin montiert werden kann, und dass die Kontaktflächen zum Gehäuse bzw. zur Gehäusehälfte eine Lagerung ermöglichen, ohne dass mechanische Elemente, zum Beispiel Sicherungselemente notwendig werden. Der in Rede stehende elektromotorische Linearantrieb wird bevorzugt zum Verstellen von Möbelbauteilen eingesetzt. Bei eingeschaltetem Linearantrieb sollten die sich entwickelnden Geräusche möglichst gering sein bzw. nicht störend wirken. Es ist deshalb vorgesehen, dass zumindest der Bereich zwischen dem Drehzahlreduziergetriebe und dem Gehäuse mit einem Schalldämmmittel ausgefüllt ist. Dies könnte beispielsweise ein eingelegtes Gummielement oder ein an das Gehäuse und/oder an das Getriebe angespritztes Gummielement sein. Das Gehäuse ist im Querschnitt zumindest an der unteren, den Ausnehmungen für die Achse abgewandten Seite gerundet. Zur besseren Stapelung von Lattenrosten während des Transportes die bereits mit einem oder mehreren elektromotorischen Linearantrieben ausgestattet sind ist deshalb vorgesehen, dass an das Gehäuse zwei an die Außenkontur angepasste Transportelemente form- und/oder kraftschlüssig festlegbar sind. Dadurch wird ein Kippen bzw. ein Verrutschen der Lattenroste untereinander vermieden. Zweckmäßigerweise haben diese Transportelemente an der freien Seite, das heißt dem Gehäuse abgewandten Seite fluchtende halbkreisförmige Einziehungen. Diese Einziehungen könnten jedoch auch an die Gehäusehälften des elektromotorischen Linearantriebes angeformt sein.

Zur Stromversorgung des Antriebsmotors ist vorgesehen, dass an das Gehäuse angrenzend an den Antriebsmotor ein Anschlusselement für ein Stromkabel vorgesehen ist. Im Innern des Gehäuses oder in einer Ausformung des Gehäuses ist eine Platine derart angeordnet, dass auf Kabel verzichtet werden kann. Zweckmäßigerweise ist der Motor einschließlich des Anschlusselementes durch eine Abdeckkappe geschützt, da dadurch verhindert wird, dass die Stromversorgung unterbrochen werden kann. Dies ist besonders schlecht zu beheben, da üblicherweise die elektromotorischen Linearantriebe eines Möbels schlecht zugänglich sind. Schließlich ist noch vorgesehen, dass die Endstellungen der Spindel durch Endschalter begrenzt sind.

Der Druckklotz könnte auch aus Stahl gefertigt und mit einer Stahlspindel verschweißt sein. Damit durch das Verfahren diese Druckklotzes kein Abrieb entsteht, könnte dieser Stahldruckklotz mit einer von außen aufgesetzten Kunststoffführung versehen sein, die in bevorzugter Ausführung aus zwei Kunststoffkappen besteht, die beispielsweise seitlich auf den Druckklotz aufgesetzt, vorzugsweise formschlüssig aufgesetzt sind. Die Kappen können auch miteinander verschraubt sein.

Ferner könnte im inneren des Gehäuses eine Steuerplatine mit aufgesetztem elektrischen Bauteilen zur Steuerung von mindestens einem Elektromotor angeordnet sein, oder im inneren des Gehäuses könnte eine Leiterplatte als Stromverteilerplatine montiert werden, welche die elektrischen Signale zur Steuerung und Stromversorgung aufteilt und weiterleitet.

Es ist ferner noch vorgesehen, dass am Gehäuse angeformte Stege, Zapfen oder Schienen zur formschlüssigen Befestigung eines Steuergehäuses oder einer Stromverteilereinheit angeordnet sind. Außerdem könnte das Gehäuse mit angeformten Stegen und/oder Ausnehmungen zur formschlüssigen Befestigung des Stromkabels oder einer Stromverteilung oder eines Anschlusssteckers zur Weiterleitung des Stromes aufweisen.

Diese oder weitere Stege oder Zapfen könnten auch zur Befestigung von Stromversorgungseinheiten, Bedienungseinheiten und Montageeinheiten herangezogen werden, so dass beispielsweise beim Transport des elektromotorischen Linearantriebes alle zum Betrieb erforderlichen Geräte, Einrichtungen, Bedienelemente und Montagehilfsmittel an das Gehäuse angesetzt werden können, so dass eine kompakte Einheit gebildet ist. In Frage kommen beispielsweise Trafos, Gleichspannungsnetzgeräte, Handschalter der Schließer usw. Es ist deshalb vorgesehen, dass an dem Gehäuse Taschen oder Stege zur Aufnahme in entsprechender Gestaltung vorgesehen sind. Die an das Gehäuse angesetzten Elemente oder Bauteile können nach dem Transport vom Gehäuse abgenommen werden.

Es ist noch vorgesehen, dass an oder in dem Gehäuse Stege angeformt oder eingeformt sind, die ein Anschlusskabel festlegen. Weiterhin sind Radien oder Bögen oder Einformungen vorgesehen, an welchen sich ein Kabel abstützt, um einen minimalen zulässigen Biegeradius nicht zu unterschreiten. Dazu sind dann an dem Gehäuse oder in dem Gehäuse Stege oder Zapfen angeformt, die ein Kabel zur Zugentlastung festsetzen, und dass an dem Gehäuse oder in dem Gehäuse bogenförmige Ansätze oder Ausformungen angebracht sind, an denen sich ein Kabel mit einem mindestzulässigen Biegeradius als Kabelknickschutz abstützt.

Es ist ferner noch vorgesehen, dass der Motoranschluss steckbar ausgebildet ist. Damit der Stecker gegen unbeabsichtigtes Herausziehen gesichert ist, können an dem Gehäuse des Linearantriebes Stege angeformt sein, die das Gehäuse des Steckers kraft- oder formschlüssig halten. Es können jedoch auch Sicherungselemente an dem Gehäuse des Linearantriebes angebracht werden, die den Stecker oder das aus dem Stecker abführende Kabel an dem Gehäuse des Linearantriebes fixieren. Dies lässt sich umsetzen, indem an dem Gehäuse oder in dem Gehäuse Stege oder Zapfen angeformt sind, die mindestens einen Anschluss, beispielsweise einen Motoranschluss kraft- oder formschlüssig mit dem Gehäuse verbinden, oder dass an diese Zapfen oder Stege ein Sicherungselement angebracht ist, das einen Motoranschluss an dem Gehäuse festsetzt.

In weiterer Ausgestaltung ist vorgesehen, dass der Linearantrieb und sein Gehäuse derart gestaltet ist, dass die Montage des Linearantriebes beispielsweise in einem Möbel werkzeuglos und durch einfache Handgriffe oder durch Montageroboter durchgeführt werden kann. Dazu ist der Linearantrieb und das Gehäuse derart gestaltet, dass eine werkzeuglose Montage von Hand oder von einer Maschine erfolgen kann.

Der bestimmungsgemäße Gebrauch des Linearantriebes beschränkt sich normalerweise auf trockene Umgebungen. Damit der Einsatzbereich des Linearantriebes erweitert wird, ist eine Abdichtung gegen Eindringen von Feuchtigkeit und Staub vorgesehen. Dabei können die Stoßflächen des Gehäuses als Labyrinthdichtung ausgeführt sein. Vorzugsweise werden jedoch zwischen den Stoßflächen der Gehäuseteile, zwischen den Stoßflächen zwischen dem Schließer, dem Gehäuse und der Achse ein oder mehrere Dichtelemente, beispielsweise aus einem elastischen Werkstoff eingebracht. So ist vorgesehen, dass zwischen den Gehäuseteilen, der Abdeckkappe, dem Schließer, der Achse, dem Motoranschluss ein oder mehrere Dichtelemente zur Abdichtung des Linearantriebes vorgesehen sind, und dass die Dichtelemente als einzelne und elastische Elemente ausgebildet sind oder an den Bauteilen des Linearantriebes einstückig angeformt sind.

Es zeigen:
- Figur 1: einen erfindungsgemäßen elektromotorischen Linearantrieb in Ansicht, mit Blick auf die dem Antriebsmotor abgewandte Seite;
- Figur 2: den elektromotorischen Linearantrieb gemäß der Figur 1, mit Blick auf die dem Antriebsmotor zugeordnete Seite;
- Figur 3: eine der Figur 1 entsprechende Schnittdarstellung;
- Figur 4: eine der Figur 1 entsprechende Darstellung, jedoch mit einem an das Gehäuse angesetzten Strom-/Signalverteiler, und
- Figur 5: eine der Figur 2 entsprechende Darstellung, jedoch mit einem an das Gehäuse angesetzten Steuergehäuse

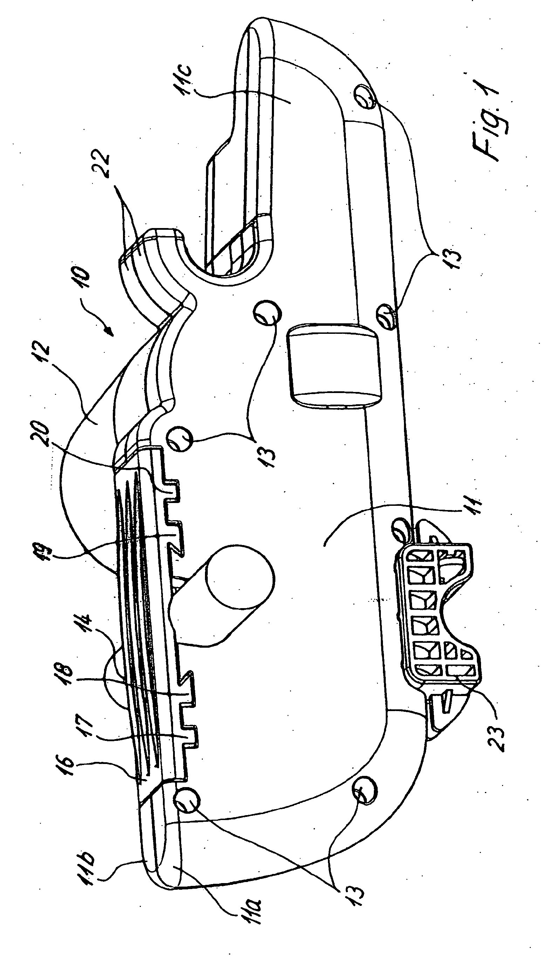

Der in den Figuren 1 bis 5 dargestellte elektromotorische Linearantrieb ist ein sogenannter Einzelantrieb, das heißt, er ist zur Verstellung eines Möbelbauteiles, insbesondere des Rückenteils oder des Fußteils eines Lattenrostes ausgelegt. Die Getriebebauteile des elektromotorischen Linearantriebes 10 sind in einem als geschlossen anzusehendem Gehäuse 11 angeordnet, welches aus zwei Gehäusehälften 11a und 11b besteht. Die Getriebebauteile werden von einem allgemein bekannten Gleichstrommotor angetrieben, der ebenfalls ein äußeres Gehäuse 11 aufweist. Das Gehäuse 11 bzw. die Gehäusehälften 11a und 11b sind aus einem Kunststoff gefertigt. Die Verbindung der beiden Gehäusehälften 11a und 11b erfolgt über mehrere Schrauben 13, die in nicht näher dargestellter Weise in Dome der Gehäusehälfte 11b eingedreht sind. Die Dome sind mit entsprechenden Gegenstücken der anderen Gehäusehälfte 11a formschlüssig verbunden, so dass eine Verschiebung der Gehäusehälften 11a und 11b bei Belastung wirksam vermieden ist.

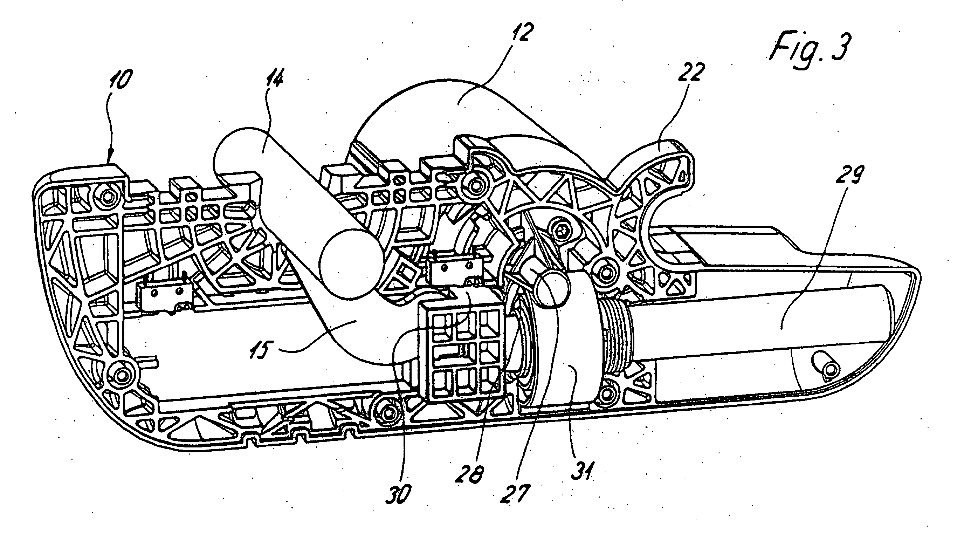

Wie anhand der Figur 3 noch erläutert wird, ist auf eine Achse 14, beispielsweise auf die Achse eines Lattenrostes ein Anlenkhebel 15 drehfest aufgesetzt. Die Halterung des elektromotorischen Linearantriebes 10 an der Achse 14 erfolgt durch einen Schließer 16, der plattenförmig ausgebildet ist, der jedoch an der den beiden Gehäusehälften 11a und 11b zugewandten Seite mit vier Stegen 17, 18, 19 und 20 versehen ist, die in Nuten eingreifen. Die Stege 17 bis 20 verlaufen parallel und im Abstand zur Achse 14, so dass der Schließer 16 von der Seite her auf die Gehäusehälften 11a und 11b aufgeschoben werden kann, so dass er äußerst stark belastbar ist, da die Hauptlastrichtung quer zur Achse 14 verläuft. Die der Achse 14 zugewandten Stege 18, 19 sind im dargestellten Ausführungsbeispiel mit schräg verlaufenden Flächen versehen, so dass die entsprechend angepassten Nuten der Gehäusehälften 11a und 11b einen Formschluss ergeben.

Wie anhand der Figur 3 noch erläutert, ist das Antriebsglied des elektromotorischen Linearantriebes 10 eine in seiner Längsrichtung verfahrbare Spindel 29. Damit sie in der abgesenkten Stellung des angeschlossenen Möbelbauteils geschützt ist, ist an das Gehäuse eine Abdeckkappe 11c angesetzt, die in bevorzugter Ausführung mit den Gehäusehälften 11a und 11b einstückig ist. Es sei noch erwähnt, dass die Stoßflächen der beiden Gehäusehälften 11a und 11b senkrecht zur Achse 14 verlaufen, das heißt, in der Einbaulage verlaufen die Stoßflächen senkrecht. Zum Betrieb des elektromotorischen Linearantriebes 10 ist es notwendig, dass dieser sich noch anderweitig abstützt. Dazu ist nicht nur das Gehäuse mit U-förmigen Ausnehmungen zur Aufnahme der Achse 14 ausgestattet, sondern noch an der gegenüber liegenden Seite mit einer Drehmomentstütze, die in den dargestellten Ausführungsbeispielen durch halbkreisförmige Ringe 22 gebildet ist, so dass sinngemäß der elektromotorische Linearantrieb 10 in ein Möbel eingehängt werden kann. Üblicherweise wird der elektromotorische Linearantrieb 10 von dem Hersteller eines Möbels, beispielsweise eines Lattenrostes daran montiert. Da beispielsweise Lattenroste im gestapelten Zustand gelagert und transportiert werden, ist vorgesehen, dass der elektromotorische Linearantrieb 10 an der der Achse 14 abgewandten Seite mit Transportelementen 23 ausgestattet ist, die an der dem Gehäuse 11 abgewandten Seite mit halbkreisförmigen Ausnehmungen versehen sind, ansonsten aber an das Gehäuse angesteckt sind.

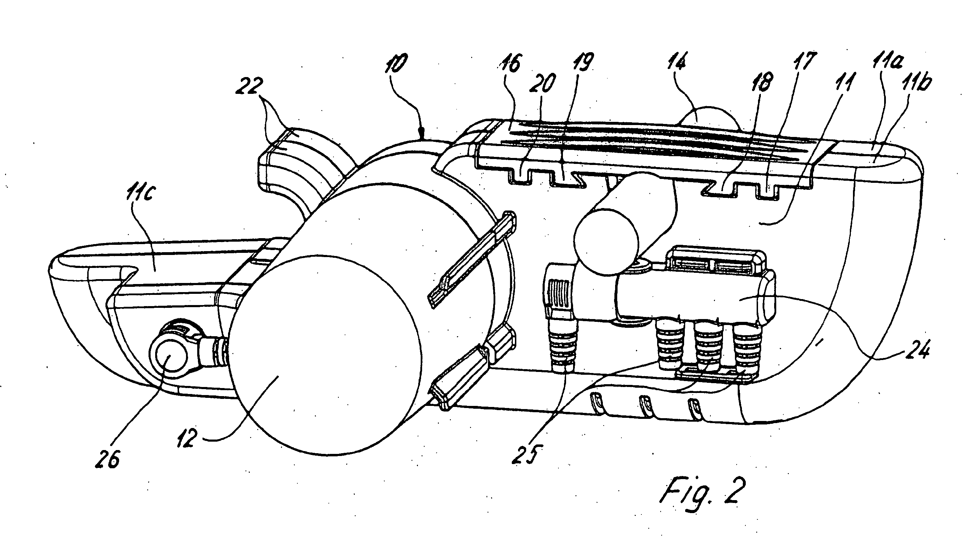

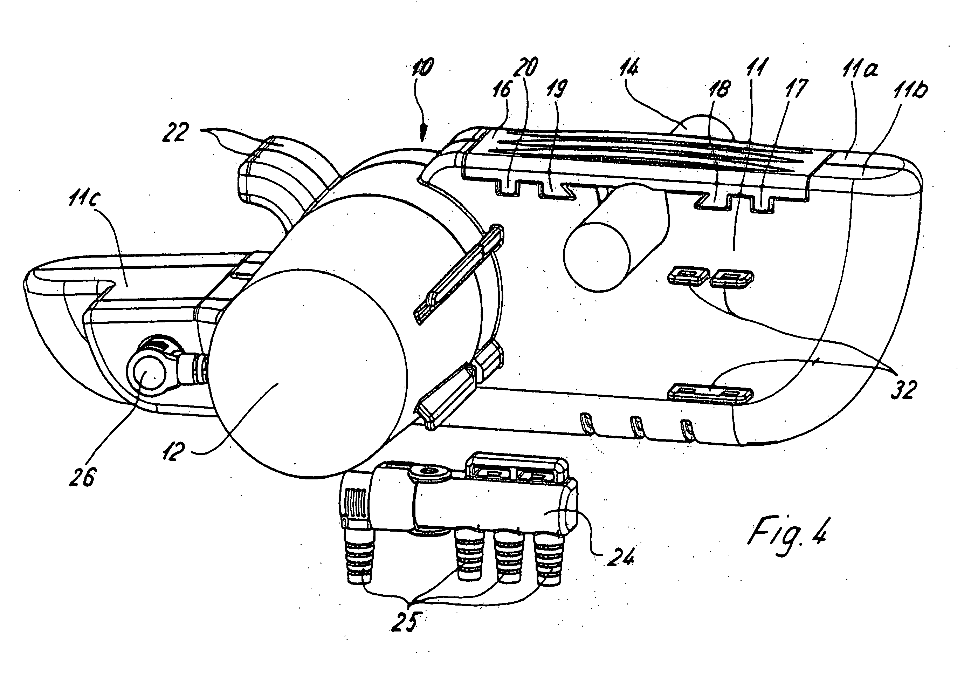

Die Figur 2 zeigt, dass das Gehäuse 11 an der dem Gehäusebereich 12 des Antriebsmotors zugewandten Seite mit einem Stromverteiler 24 versehen ist, der abnehmbar bzw. angesteckt oder angeklippst ist, wie die Figur 4 zeigt. Dieser Stromverteiler 24 enthält in diesem Ausführungsbeispiel vier Anschlüsse 25, da ein Anschluss zur Verbindung mit dem Netzteil, ein weiterer Anschluss für die Verbindung mit einem weiteren elektromotorischen Linearantrieb ein Anschluss für den Motoranschluss 26 und ein weiterer Anschluss für die Verbindung zum Handschalter genutzt wird.

Die Figur 3 zeigt, dass von dem Antriebsmotor 12 ein Drehzahlreduziergetriebe 31 angetrieben wird, welches gemäß der Figur 3 aus einer Schnecke 27 und einem damit in Eingriff stehenden Schneckenrad 28 gebildet ist. Das Schneckenrad 28 ist mit einer zentrischen Innengewindebohrung versehen, so dass eine damit in Eingriff stehende Spindel 29 in ihrer Längsrichtung verfahrbar ist. Die Spindel 29 ist gegen Drehung gesichert und trägt an der dem Anlenkhebel 15 zugewandten Seite einen Druckklotz 30, der aus Stahl oder aus einem Kunststoff gefertigt sein kann. Sofern er aus Kunststoff gefertigt ist, kann er mit metallischen Verstärkungseinlagen versehen werden, die im Zuge der Herstellung umspritzt werden können und als Reibelement mit dem Anlenkhebel 15 in Verbindung stehen. Die Spindel 29 könnte auch aus einem Kunststoff oder Stahl bestehen. Sofern der Druckklotz 30 aus Stahl besteht, ist er außenseitig mit Kunststoffkappen bestückt, um die Reibung zu den Gehäusehälften 11a, 11b vermindern. Der Druckklotz 30 ist durch das entsprechend ausgelegte Gehäuse 11 geführt. An der dem Anlenkhebel 15 zugewandten Seite ist er stufenförmig abgesetzt, wobei der Anlenkhebel 15 die die Stufen bildende Fläche kontaktiert. Das Schneckenrad 27 ist mittels eines als Getriebewinkel bezeichneten Formteils gelagert. Wie die Figur 3 deutlich zeigt, sind die Gehäusehälften 11a und 11b innenseitig verrippt, wobei jedoch der Bewegungsbereich des Anlenkhebels 15 frei von Rippen ist. Im Bereich der Achse 14 verlaufen die Rippen konzentrisch zur Ausnehmung, und sind durch kreuzende Rippen zusätzlich verstärkt.

Die Figur 4 zeigt gegenüber der Figur 2, dass der mit den Anschlüssen 25 versehene Stromverteiler 24 an das Gehäuse 11 ansteckbar ist, dazu ist das Gehäuse mit mehreren Rastnuten 32 ausgestattet. Dabei ist der Stromverteiler 24 mit einem steckbaren Anschluss und mit mehreren festen Anschlüssen versehen. Der steckbare Anschluss führt zu einer Handbedienung und ist mit einem Sicherungselement versehen, um die Steckverbindung gegen unbeabsichtigtes Lösen zu sichern. Die übrigen Anschlüsse sind fest mit dem Stromverteiler verbunden und weisen in nicht näher dargestellter Art weiterführende Kabel auf, um die elektrischen Signale zwischen einer Handbedienung, einer Stromversorgungseinheit und dem Motor des Antriebs 10 oder den Motoren weiterer Antriebe zu ermöglichen.

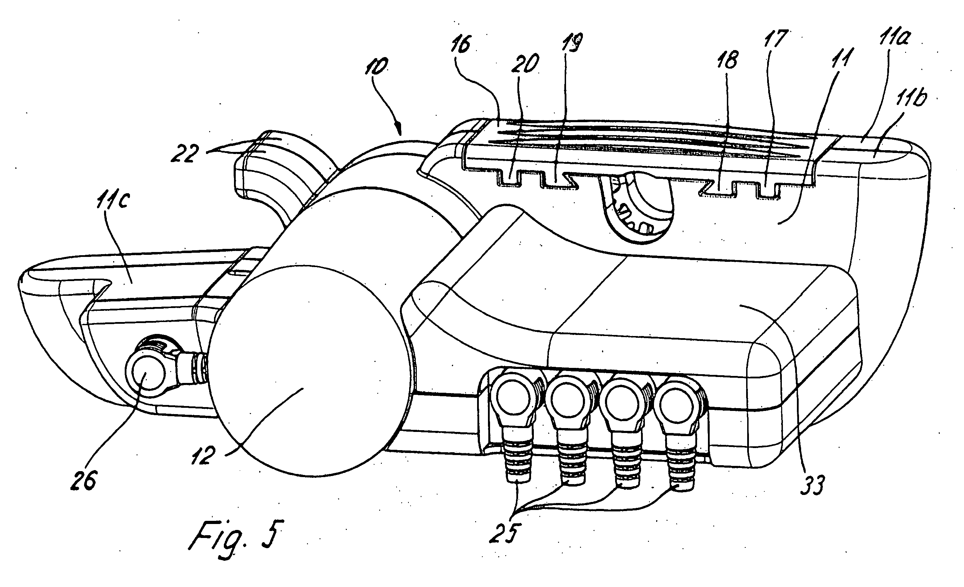

Die Ausführung nach der Figur 5 unterscheidet sich von den restlichen noch dadurch, dass das Gehäuse des Antriebsmotors 12 mit in Längsrichtung verlaufenden Stegen versehen ist, um ein die Steuerung aufnehmendes Steuergehäuse 33 daran festzulegen. Das Steuergehäuse ist relativ flach, so dass die äußere freie Fläche noch tiefer liegt, als der Schließer 16. Weiterhin ist das Steuergehäuse 33 auf der der Gehäusehälfte 11b zugewandten Seite mit nicht näher dargestellten Rastelementen versehen, welche die Rastnuten 32 zumindest teilweise umgreifen oder dort eingreifen, um das Steuergehäuse 33 sicher am Antrieb 10 zu fixieren. Das Steuergehäuse 33 selbst beinhaltet vorzugsweise eine Steuerplatine mit einem Steuerteil und einem Leistungsteil. Dabei werden Steuersignale über die Anschlüsse 25, beispielsweise von einer Handbedienung kommend, eingespeist, während Leistungsstellglieder in Form von elektromechanischen Schaltern den Leistungsteil bilden und den Motor des Antriebes 10 oder weitere Motore weiterer nicht dargestellter Antriebe zu steuern. Im Inneren des Steuergehäuses 33 werden vorzugsweise elektrische Spannungen eines niedrigen Niveaus verarbeitet, welche von einer nicht näher dargestellten Stromversorgungseinheit in Form einer Gleich- oder Wechselstromquelle mit integrierten Transformator über die Anschlüsse 25 in das Steuergehäuse 33 gelangen. Denkbar wäre jedoch auch, dass diese Stromversorgungseinheit Teil des Steuergehäuses 33 ist. In nicht näher dargestellter Form sind die Anschlüsse 25 steckbar ausgeführt und können gegen unbeabsichtigtes Herausziehen aus der Steckverbindung gesichert sein.

In nicht näher dargestellter Weise kann das Gehäuse 11 an der Außenfläche mit Stegen oder ähnlichen Elementen zur Befestigung einer Handbedienvorrichtung versehen sein. Dadurch lässt sich die Handbedienvorrichtung während des Transportes sicher arretieren. Ferner können im Gehäuse 11 oder am Gehäuse 11 Taschen oder Stege zur Aufnahme von Batterien oder Akkumulatoren vorgesehen sein, damit die Notstromversorgung gesichert ist.

### Bezugszeichenliste

- 10: Linearantrieb
- 11: Gehäuse
- 11a, 11b: Gehäusehälften
- 11c: Abdeckkappe
- 12: Antriebsmotor
- 13: Schrauben
- 14: Achse
- 15: Anlenkhebel
- 16: Schließer
- 17 - 20: Stege
- 22: halbkreisförmige Ringe
- 23: Transportelemente
- 24: Stromverteiler
- 25: Anschlüsse
- 26: Motoranschluss
- 27: Schnecke
- 28: Schneckenrad
- 29: Spindel
- 30: Druckklotz
- 31: Drehzahlreduziergetriebe
- 32: Rastnuten
- 33: Steuergehäuse

## Patentansprüche

1. Elektromotorischer Linearantrieb (10) für die verstellbaren Bauteile eines Möbels, mit einem Gehäuse (11), bei dem beabstandete Gehäusewandungen mit fluchtenden Ausnehmungen zur Aufnahme der Achse eines beweglichen Möbelteils versehen sind, und mit einem die Ausnehmungen abdeckenden Schließer (16), der zur Sicherung der Achse (14) an den zugehörigen Rändern der Gehäusewandungen festgelegt ist, mit einem Antriebsmotor (12) und einem damit gekoppelten Drehzahlreduziergetriebe (27, 28) mit einem rotierenden Abtriebsglied zum Antrieb von mindestens einem linear verfahrbaren Stellglied (29), welches zur Umsetzung seiner linearen Bewegung in eine Drehbewegung der Achse (14) auf einen an dieser festgesetzten Anlenkhebel (15) einwirkt, **dadurch gekennzeichnet, dass** das Abtriebsglied des Drehzahlreduziergetriebes (27, 28) ein Zahn- oder Schneckenrad (28) ist, welches mit einer zentrischen Innengewindebohrung versehen ist, und dass das Stellglied eine mit dem Zahn- oder Schneckenrad (28) in Eingriff stehende, gegen Drehung gesicherte und ausschließlich in ihrer Längsrichtung verfahrbare Stellspindel (29) ist, die mit dem Anlenkhebel in der Wirkverbindung steht.

2. Elektromotorischer Linearantrieb nach Anspruch 1, **dadurch gekennzeichnet, dass** der Schließer (16) in Längsrichtung der Achse in Führungen der Gehäusewandungen verschiebbar und in der Endstellung formschlüssig mit den oberen Rändern der Gehäusewandungen verbunden ist.

3. Elektromotorischer Linearantrieb nach Anspruch 2, **dadurch gekennzeichnet, dass** in jeder Gehäusewandung wenigstens zwei hinterschnittene Nuten vorgesehen sind, und dass die hinterschnittenen Nuten der Gehäusewandungen fluchtend zueinander stehen.

4. Elektromotorischer Linearantrieb nach Anspruch 2 oder 3, **dadurch gekennzeichnet, dass** in jeder Gehäusewand beidseits der fluchtenden Ausnehmungen jeweils zwei Nuten vorgesehen sind, von denen wenigstens die der Ausnehmung zugewandt liegende hinterschnitten ist.

5. Elektromotorischer Linearantrieb nach einem oder mehreren der vorhergehenden Ansprüche 2 bis 4, **dadurch gekennzeichnet, dass** der Schließer (16) in die Nuten der Gehäusewandungen eingreifende Sicherungsstege (17 bis 20) aufweist.

6. Elektromotorischer Linearantrieb nach Anspruch 5, **dadurch gekennzeichnet, dass** sich die Sicherungsstege (17 bis 20) von einer Längsseite bis zur gegenüberliegenden Längsseite des Schließer (16) erstrecken.

7. Elektromotorischer Linearantrieb nach einem oder mehreren der vorhergehenden Ansprüche 2 bis 6, **dadurch gekennzeichnet, dass** der Schließer (16) an der freien Außenseite und/ oder der freien Innenseite mit in seiner Längsrichtung verlaufenden Verstärkungsrippen versehen ist.

8. Elektromotorischer Linearantrieb nach einem oder mehreren der vorhergehenden Ansprüche 2 bis 6, **dadurch gekennzeichnet, dass** der Schließer (16) angeformte oder eingebrachte Abschnitte aufweist, die kraft- und/oder formschlüssig in das Gehäuse (11) eingreifen oder an das Gehäuse (11) angreifen.

9. Elektromotorischer Linearantrieb nach Anspruch 1, **dadurch gekennzeichnet, dass** das aus einem Kunststoff bestehende Gehäuse (11) aus zwei Gehäusehälften (11a, 11b) besteht, deren Stoßflächen quer zur Drehachse des Motors liegen.

10. Elektromotorischer Linearantrieb nach Anspruch 9, **dadurch gekennzeichnet, dass** die Stoßflächen der Gehäusehälfte (11a, 11b) profiliert, verzahnt oder ähnlich gestaltet sind, und dass die Stoßflächen ineinander greifen.

11. Elektromotorischer Linearantrieb nach einem oder mehreren der vorhergehenden Ansprüche 1 bis 10, **dadurch gekennzeichnet, dass** die Gehäusehälften (11a, 11b) ringförmige Zapfen, Stege oder Ausnehmungen aufweisen, die konzentrisch zueinander und um Befestigungsschrauben derart verlaufen, dass sich beim Anziehen der Schrauben diese sich ineinandersetzen.

12. Elektromotorischer Linearantrieb nach einem oder mehreren der vorhergehenden Ansprüche 1 bis 11, **dadurch gekennzeichnet, dass** innerhalb des Gehäuses (11) eine eine Anlaufkante bildende Wulst derart angeformt ist, dass das Getriebe oder ein Getriebebauteil bei der Rückstellung des angeschlossenen Möbelbauteils durch die Schwerkraft gegen Verschiebung stützbar ist.

13. Elektromotorischer Linearantrieb nach Anspruch 1, **dadurch gekennzeichnet, dass** die Gehäusehälften (11a, 11b) zur Reduzierung der Wanddicken durch Fasern, vorzugsweise durch Glasfasern verstärkt sind.

14. Elektromotorischer Linearantrieb nach Anspruch 9, **dadurch gekennzeichnet, dass** das Gehäuse an der dem Anlenkhebel (15) abgewandten Seite mit einer Abdeckkappe (11c) aus einem festen oder elastischen Material versehen ist, in die die Spindel in der eingefahrenen Stellung einliegt.

15. Elektromotorischer Linearantrieb nach Anspruch 2, **dadurch gekennzeichnet, dass** die Abdeckkappe (11c) an das Gehäuse (11) rastend angesetzt oder mit diesem verschraubt ist, oder das die Gehäusehälfte (11a, 11b) mit der Abdeckkappe (11c) ein einstückiges Formteil bildet.

16. Elektromotorischer Linearantrieb nach einem oder mehreren der vorhergehenden Ansprüche 8 bis 15, **dadurch gekennzeichnet, dass** das Gehäuse (11) an der dem Antriebsmotor (12) zugewandten Seite zur Bildung einer Drehmomentstütze mit einer Öffnung oder einer Aussparung versehen ist.

17. Elektromotorischer Linearantrieb nach Anspruch 16, **dadurch gekennzeichnet, dass** die Öffnung der Drehmomentstütze (22) durch ein Bauteil oder durch einen Verschlussmechanismus in ihrer Weite veränderbar ist oder dass die Öffnung durch einen weiteren Schließer abdeckbar ist.

18. Elektromotorischer Linearantrieb nach einem oder mehreren der vorhergehenden Ansprüche 9 bis 17, **dadurch gekennzeichnet, dass** die Gehäusehälften (11a, 11b) mit sich kreuzenden Verstärkungsrippen versehen sind.

19. Elektromotorischer Linearantrieb nach Anspruch 18, **dadurch gekennzeichnet, dass** die Gehäusehälften (11a, 11b) außen glattflächig gestaltet und das die sich kreuzenden Verstärkungsrippen innenseitig angeordnet sind.

20. Elektromotorischer Linearantrieb nach Anspruch 18 oder 19, **dadurch gekennzeichnet, dass** die an die Ausnehmungen angrenzenden Verstärkungsrippen konzentrisch oder annährend konzentrisch zu den Ausnehmungen verlaufen.

21. Elektromotorischer Linearantrieb nach Anspruch 18 oder 19, **dadurch gekennzeichnet, dass** der Bewegungsbereich des Anlenkhebels (15) frei von Verstärkungsrippen ist.

22. Elektromotorischer Linearantrieb nach Anspruch 1, **dadurch gekennzeichnet, dass** die Spindel (29) aus Stahl oder aus einem Kunststoff besteht.

23. Elektromotorischer Linearantrieb nach Anspruch 22, **dadurch gekennzeichnet, dass** auf den dem Anlenkhebel (15) zugewandten Endbereich der Spindel ein Druckklotz (30) fest aufgesetzt ist.

24. Elektromotorischer Linearantrieb nach Anspruch 23, **dadurch gekennzeichnet, dass** der Druckklotz (30) aus Kunststoff besteht und mit einer metallischen Verstärkungseinlage ausgestattet ist.

25. Elektromotorischer Linearantrieb nach Anspruch 23, **dadurch gekennzeichnet, dass** der Druckklotz (30) aus Stahl besteht, und dass auf die Außenfläche des Stahldruckklotzes eine Kunststoffführung aufgesetzt ist, die vorzugsweise aus zwei seitlich auf den Druckklotz aufgesetzten Kunststoffkappen besteht.

26. Elektromotorischer Linearantrieb nach Anspruch 20, **dadurch gekennzeichnet, dass** der Druckklotz (30) und die Spindel (29) kraft-, form- oder stoffschlüssig zusammengefügt sind oder ein Formteil bilden.

27. Elektromotorischer Linearantrieb nach Anspruch 24, **dadurch gekennzeichnet, dass** die metallische Verstärkungseinlage innerhalb des Kunststoffklotzes angeordnet oder zumindest an der dem Anlenkhebel zugewandten Seite an den Kunststoffklotz angesetzt ist.

28. Elektromotorischer Linearantrieb nach einem oder mehreren der vorhergehenden Ansprüche 23 bis 27, **dadurch gekennzeichnet, dass** der Druckklotz (39), die metallische Verstärkungseinlage des Kunststoffdruckklotzes, eine an einer Stahlspindel angesetzte Platte oder das Stirnende der Spindel selbst die Kontaktfläche zum Anlenkhebel (15) bildet und senkrecht zur Mittellängsachse der Spindel oder unter einem Winkel relativ zur Vertikalen versetzt angeordnet ist.

29. Elektromotorischer Linearantrieb nach Anspruch 1, **dadurch gekennzeichnet, dass** der Anlenkhebel (15) winkelförmig gestaltet und als Stanzteil aus einem Stahl oder als Stahlgussteil mit planparallelen Seitenflanken gestaltet ist.

30. Elektromotorischer Linearantrieb nach Anspruch 29, **dadurch gekennzeichnet, dass** die dem Druckklotz (30) zugewandte Fläche des Anlenkhebels (15) bogenförmig oder halbkreisförmig ausgebildet ist.

31. Elektromotorischer Linearantrieb nach Anspruch 1, **dadurch gekennzeichnet, dass** die Lagerung des Schneckenrades (28) mittels eines Wälzlagers und eines als Formteil ausgebildeten Getriebewinkels erfolgt.

32. Elektromotorischer Linearantrieb nach Anspruch 31, **dadurch gekennzeichnet, dass** der Getriebewinkel aus einer Hülse zur Aufnahme des Wälzlagers und aus einem Befestigungsflansch zum Anschlagen an das Gehäuse des Antriebsmotors (12) ausgestattet ist.

33. Elektromotorischer Linearantrieb nach Anspruch 31 oder 32, **dadurch gekennzeichnet**, der Getriebewinkel aus einem Kunststoff besteht und mittels Fasern, insbesondere Glasfasern verstärkt ist.

34. Elektromotorischer Linearantrieb nach einem oder mehreren der vorhergehenden Ansprüche 1 bis 33, **dadurch gekennzeichnet, dass** das Schneckenrad (28) zweiteilig ausgebildet ist und aus einem Außenkranz mit der Verzahnung und einer Trägerhülse besteht, die mit dem Innengewinde und einem äußeren Lagersitz für das Wälzlager versehen ist.

35. Elektromotorischer Linearantrieb nach Anspruch 34, **dadurch gekennzeichnet, dass** der Außenkranz mit der Trägerhülse formschlüssig durch Stege und Nuten verbunden ist.

36. Elektromotorischer Linearantrieb nach einem oder mehreren der vorhergehenden Ansprüche 1 bis 33, **dadurch gekennzeichnet, dass** das Schneckenrad (28) mit dem Lagersitz und dem Innengewinde als ein einstückiges Formteil aus einem Kunststoff ausgebildet ist.

37. Elektromotorischer Linearantrieb nach einem oder mehreren der vorhergehenden Ansprüche 1 bis 36, **dadurch gekennzeichnet, dass** der Linearantrieb als nicht selbsthemmender Antrieb ausgebildet ist, und dass der Linearantrieb mit einem in einer Bewegungsrichtung der Spindel (29) wirksamen Bremselement zum Halten der Last bei abgeschaltetem Antriebsmotor ausgestattet ist.

38. Elektromotorischer Linearantrieb nach Anspruch 37, **dadurch gekennzeichnet, dass** das Bremselement als mit mehreren Windungen ausgestattetes Federbremselement ausgebildet ist, und dass ein Ende einer Windung in der Hülse des Getriebewinkels festgelegt und dass ansonsten das Federbremselement in einen Ringspalt zwischen der Hülse und dem Lagersitz angeordnet ist.

39. Elektromotorischer Linearantrieb nach einem oder mehreren der vorhergehenden Ansprüche 1 bis 38, **dadurch gekennzeichnet, dass** die Spindel (21) aus Stahl besteht, und dass das freie, dem Schneckenrad (28) abgewandt liegende Stirnende auf ein in dem Gehäuse geführtes Gleitstück einwirkt.

40. Elektromotorischer Linearantrieb nach Anspruch 39, **dadurch gekennzeichnet, dass** die freien, dem Schneckenrad (28) abgewandt liegende Stirnfläche der Spindel in Form eines Druckklotzes (30) zur Bildung der Kontaktflächen zum Anlenkhebel (15) rechtwinklig zu der Mittellängsachse der Spindel oder gegenüber der Vertikalen geneigt ist.

41. Elektromotorischer Linearantrieb nach einem oder mehreren der vorhergehenden Ansprüche 1 bis 40, **dadurch gekennzeichnet, dass** die Gehäusehälften (11a, 11b) innenseitig mit quer zur Mittellängsachse der Spindel stehenden Fixierstegen versehen sind, gegen die sich die Stirnflächen der Hülse des Getriebewinkels abstützen.

42. Elektromotorischer Linearantrieb nach einem oder mehreren der vorhergehenden Ansprüche 1 bis 41, bei dem auf die Spindel ein Druckstück aufgesetzt ist, **dadurch gekennzeichnet, dass** das Druckstück an der dem Anlenkhebel (15) zugewandten Seite stufenförmig ausgebildet ist, so dass ein seitlicher, flächiger Kontakt zwischen dem Anlenkhebel (15) und dem Druckstück gegeben ist.

43. Elektromotorischer Linearantrieb nach einem oder mehreren der vorhergehenden Ansprüche 1 bis 42, **dadurch gekennzeichnet, dass** der elektromotorische Antriebseinheit mit dem angeflanschten Getriebewinkel so wie dem darin montierten Schneckenrad und dem Wälzlager eine Montageeinheit bilden, und das diese Einheit ohne Verwendung von mechanischen Elementen lagerbar ist.

44. Elektromotorischer Linearantrieb an einem oder mehreren der vorhergehenden Ansprüche 1 bis 43, **dadurch gekennzeichnet, dass** zumindest der an den Getriebewinkel angrenzende Bereich zu dem Gehäuse (11) durch ein Schalldämmmittel ausgefüllt ist.

45. Elektromotorischer Linearantrieb nach Anspruch 44, **dadurch gekennzeichnet, dass** das Schalldämmmittel als Gummielement oder ein an die Gehäusehälfte und/oder an den Getriebewinkel angespritztes Gummielement ausgebildet ist.

46. Elektromotorischer Linearantrieb nach einem oder mehreren der vorhergehenden Ansprüche 1 bis 45, **dadurch gekennzeichnet, dass** das Gehäuse an der unteren, den Ausnehmungen für den Schließer (16) abgewandten Seite mit zwei an das Gehäuse form- und/oder kraftschlüssig festlegbaren Transportelementen (23) versehen ist.

47. Elektromotorischer Linearantrieb nach Anspruch 46, **dadurch gekennzeichnet, dass** die Transportelemente (23) an der unteren, der Wandung des Gehäuses abgewandten Seite mit zwei fluchtenden halbkreisförmigen Einziehungen versehen ist.

48. Elektromotorischer Linearantrieb nach Anspruch 47, **dadurch gekennzeichnet, dass** die halbkreisförmigen Einziehungen einstückig an die Gehäusehälften (11a, 11b) angeformt sind.

49. Elektromotorischer Linearantrieb nach einem oder mehreren der vorhergehenden Ansprüche 1 bis 48, **dadurch gekennzeichnet, dass** am Gehäuse (11) vorzugsweise außenseitig benachbartes Antriebsmotors (12) ein Anschlusselement für ein Stromkabel vorgesehen ist, dass im innern des Gehäuses eine Steuerplatine derart angeordnet ist, dass der Innenraum des Gehäuses kabellos ist.

50. Elektromotorischer Linearantrieb nach Anspruch 49, **dadurch gekennzeichnet, dass** im inneren des Gehäuses (11) oder einer Ausformung des Gehäuses (11) eine Steuerplatine mit aufgesetzten elektrischen Bauteil zur Steuerung von mindestens einem Elektromotor (12) angeordnet ist, oder dass im Inneren des Gehäuses eine Leiterplatte als Stromverteilerplatine angeordnet ist, welche die elektrischen Signale zur Steuerung und Stromversorgung aufteilt und weiterleitet.

51. Elektromotorischer Linearantrieb nach einem oder mehreren der vorhergehenden Ansprüche 1 bis 49, **dadurch gekennzeichnet, dass** der Antriebsmotor (12) und das Anschlusselement zur elektrischen Stromversorgung durch eine gemeinsame Abdeckkappe übergriffen sind.

52. Elektromotorischer Linearantrieb nach einem oder mehreren der vorhergehenden Ansprüche 1 bis 51, **dadurch gekennzeichnet, dass** die Endstellungen der Spindel (21) durch Endschalter begrenzt sind.

53. Elektromotorischer Linearantrieb nach einem oder mehreren der vorhergehenden Ansprüche 1 bis 52, **dadurch gekennzeichnet, dass** am Gehäuses Stege, Zapfen oder Schienen zur formschlüssigen Befestigung eines Steuergehäuses (33) oder einer Stromverteilereinheit angeformt sind.

54. Elektromotorischer Linearantrieb nach einem oder mehreren der vorhergehenden Ansprüche 1 bis 53, **dadurch gekennzeichnet, dass** das Gehäuses (11) angeformte Stege und/oder Ausnehmungen zur formschlüssigen Befestigung eines Stromkabels oder einer Stromverteilung oder eines Anschlusssteckers zur Weiterleitung des Stromes aufweist.

55. Elektromotorischer Linearantrieb nach einem oder mehreren der vorhergehenden Ansprüche 1 bis 54, **dadurch gekennzeichnet, dass** die Außenfläche des Gehäuses (11) Stege oder dergleichen zur Befestigung einer Handbedienvorrichtung aufweist.

56. Elektromotorischer Linearantrieb nach einem oder mehreren der vorhergehenden Ansprüche 1 bis 55, **dadurch gekennzeichnet, dass** an dem Gehäuse (11) oder in dem Gehäuse (11) Taschen oder Stege zur Aufnahme von Batterien zur Notstromversorgung vorgesehen sind.

57. Elektromotorischer Linearantrieb nach einem oder mehreren der vorhergehenden Ansprüche 1 bis 56, **dadurch gekennzeichnet, dass** an dem Gehäuse (11) Taschen oder Stege zur Aufnahme von Energieversorgungseinheiten, Bedienungseinheiten und Montageeinheiten wie Trafos, Gleichspannungsnetzteile, Handschalter, Schließer (16) angeordnet sind, und dass diese Elemente nach dem Transport des Linearantriebes (10) von diesem abnehmbar sind.

58. Elektromotorischer Linearantrieb nach einem oder mehreren der vorhergehenden Ansprüche 1 bis 57, **dadurch gekennzeichnet, dass** an dem Gehäuse (11) oder in dem Gehäuse (11) Stege oder Zapfen angeformt sind, die ein Kabel zur Kabelzugentlastung festsetzen, und dass an dem Gehäuse (11) oder in dem Gehäuse (11) bogenförmige Ansätze oder Ausformungen angebracht sind, an denen sich ein Kabel mit einem mindestzulässigen Biegeradius als Kabelknickschutz abstützt.

59. Elektromotorischer Linearantrieb nach einem oder mehreren der vorhergehenden Ansprüche 1 bis 58, **dadurch gekennzeichnet, dass** an dem Gehäuse (11) oder in dem Gehäuse (11) Stege oder Zapfen angeformt sind, die mindestens einen Anschluss, beispielsweise einen Motoranschluss (26), kraft- oder formschlüssig mit dem Gehäuse (11) verbinden, oder dass an diese Zapfen oder Stege ein Sicherungselement derart angebracht ist, dass ein Motoranschluss (26) an dem Gehäuse (11) festsetzbar ist.

## Claims

1. Electromotive linear drive (10) for the adjustable components of a piece of furniture, having a housing (11) in which housing walls, which are at a distance from one another, are provided with aligned recesses for holding the shaft of a moving furniture part, and having a closer (16), which covers the recesses and is fixed to the associated edges of the housing walls in order to secure the shaft (14), having a drive motor (12) and having a rotation-speed reduction gearbox (27, 28) which is coupled thereto and has a rotating output drive element for driving at least one actuating element (29), which can be moved linearly and acts on an articulation lever (15), which is fixed to the shaft (14), in order to convert the linear movement of the actuating element (29) to a rotary movement of the shaft (14), **characterized in that** the output drive element of the rotation-speed reduction gearbox (27, 28) is a gearwheel or worm gear (28), which is provided with a central internal threaded hole, and **in that** the actuating element is an actuating spindle (29), which engages with the gearwheel or worm gear (28), is secured against rotation, can be moved exclusively in its longitudinal direction and is operatively connected to the articulation lever.

2. Electromotive linear drive according to Claim 1, **characterized in that** the closer (16) can be moved in guides in the housing walls in the longitudinal direction of the shaft and, in the limit position, is connected in an interlocking manner to the upper edges of the housing walls.

3. Electromotive linear drive according to Claim 2, **characterized in that** at least two undercut grooves are provided in each housing wall, and **in that** the undercut grooves in the housing walls are aligned with one another.

4. Electromotive linear drive according to Claim 2 or 3, **characterized in that** two grooves are in each case provided on both sides of the aligned recesses in each housing wall, of which grooves at least that which faces the recess is undercut.

5. Electromotive linear drive according to one or more of the preceding Claims 2 to 4, **characterized in that** the closer (16) has securing webs (17 to 20) which engage in the grooves in the housing walls.

6. Electromotive linear drive according to Claim 5, **characterized in that** the securing webs (17 to 20) extend from one longitudinal face to the opposite longitudinal face of the closer (16).

7. Electromotive linear drive according to one or more of the preceding Claims 2 to 6, **characterized in that** the closer (16) is provided on the free outer face and/or the free inner face with reinforcing ribs which run in its longitudinal direction.

8. Electromotive linear drive according to one or more of the preceding Claims 2 to 6, **characterized in that** the closer (16) has integrally formed or incorporated sections which engage in a force-fitting and/or interlocking manner in the housing (11), or act on the housing (11).

9. Electromotive linear drive according to Claim 1, **characterized in that** the housing (11) is composed of a plastic and consists of two housing halves (11a, 11b) whose abutting surfaces are transverse with respect to the rotation axis of the motor.

10. Electromotive linear drive according to Claim 9, **characterized in that** the abutting surfaces of the housing halves (11a, 11b) are profiled, toothed or the like, and **in that** the abutting surfaces engage in one another.

11. Electromotive linear drive according to one or more of the preceding Claims 1 to 10, **characterized in that** the housing halves (11a, 11b) have annular pins, webs or recesses, which run concentrically with respect to one another and around attachment screws such that, when the screws are tightened, they are inserted into one another.

12. Electromotive linear drive according to one or more of the preceding Claims 1 to 11, **characterized in that** a bead which forms an edge to run onto is integrally form within the housing (11), such that the gearbox or a gearbox component can be supported against movement by the force of gravity when the connected furniture component is being reset.

13. Electromotive linear drive according to Claim 1, **characterized in that** the housing halves (11a, 11b) are reinforced by fibres, preferably by glass fibres, in order to reduce the wall thicknesses.

14. Electromotive linear drive according to Claim 9, **characterized in that** the housing is provided on the side facing away from the articulation lever (15) with a cover cap (11c), which is composed of a solid or elastic material and into which the spindle is inserted in the retracted position.

15. Electromotive linear drive according to Claim 2, **characterized in that** the cover cap (11c) is fitted to the housing (11) such that it latches, or is screwed thereto, or that the housing halves (11a, 11b) form an integral moulding with the cover cap (11c).

16. Electromotive linear drive according to one or more of the preceding Claims 8 to 15, **characterized in that** the housing (11) is provided on the side facing the drive motor (12) with an opening or a cutout in order to form a torque support.

17. Electromotive linear drive according to Claim 16, **characterized in that** the width of the opening in the torque support (22) can be varied by means of a component or by means of a closure mechanism, or in that the opening can be covered by a further closer.

18. Electromotive linear drive according to one or more of the preceding Claims 9 to 17, **characterized in that** the housing halves (11a, 11b) are provided with crossing reinforcing ribs.

19. Electromotive linear drive according to Claim 18, **characterized in that** the housing halves (11a, 11b) have smooth surfaces on the outside, and **in that** the crossing reinforcing ribs are arranged on the inside.

20. Electromotive linear drive according to Claim 18 or 19, **characterized in that** the reinforcing ribs which are adjacent to the recesses run concentrically or approximately concentrically with respect to the recesses.

21. Electromotive linear drive according to Claim 18 or 19, **characterized in that** the movement area of the articulation lever (15) is free of reinforcing ribs.

22. Electromotive linear drive according to Claim 1, **characterized in that** the spindle (29) is composed of steel or of a plastic.

23. Electromotive linear drive according to Claim 22, **characterized in that** a pressure block (30) is fitted fixed to the end area of the spindle facing the articulation lever (15).

24. Electromotive linear drive according to Claim 23, **characterized in that** the pressure block (30) is composed of plastic and is equipped with a metallic reinforcing insert.

25. Electromotive linear drive according to Claim 23, **characterized in that** the pressure block (30) is composed of steel, and **in that** a plastic guide is fitted to the outer surface of the steel pressure block, and preferably consists of two plastic caps which are fitted to the pressure block at the side.

26. Electromotive linear drive according to Claim 20, **characterized in that** the pressure block (30) and the spindle (29) are joined together in a force-fitting, interlocking or integral manner, or form a moulding.

27. Electromotive linear drive according to Claim 24, **characterized in that** the metallic reinforcing insert is arranged within the plastic block or is fitted to the plastic block, at least on the side facing the articulation lever.

28. Electromotive linear drive according to one or more of the preceding Claims 23 to 27, **characterized in that** the pressure block (39), the metallic reinforcing insert in the plastic pressure block, a plate which is fitted to a steel spindle or the end of the spindle itself forms the contact surface with the articulation lever (15) and is arranged offset at right angles to the centre longitudinal axis of this spindle, or at an angle relative to the vertical.

29. Electromotive linear drive according to Claim 1, **characterized in that** the articulation lever (15) is angled and is in the form of a stamped part composed of a steel, or is in the form of a steel casting with plane-parallel side flanks.

30. Electromotive linear drive according to Claim 29, **characterized in that that** surface of the articulation lever (15) which faces the pressure block (30) is curved or semicircular.

31. Electromotive linear drive according to Claim 1, **characterized in that** the worm gear (28) is borne by means of a roller bearing and a gearbox bracket in the form of a moulding.

32. Electromotive linear drive according to Claim 31, **characterized in that** the gearbox bracket consists of a sleeve for holding the roller bearing and of an attachment flange for attachment to the housing of the drive motor (12).

33. Electromotive linear drive according to Claim 31 or 32, **characterized in that** the gearbox bracket is composed of a plastic and is reinforced by means of fibres, in particular glass fibres.

34. Electromotive linear drive according to one or more of the preceding Claims 1 to 33, **characterized in that** the worm gear (28) is formed from two parts and consists of an outer rim with the tooth system and a supporting sleeve, which is provided with the internal thread and with an outer bearing seat for the roller bearing.

35. Electromotive linear drive according to Claim 34, **characterized in that** the outer rim is integrally connected to the supporting sleeve by webs and grooves.

36. Electromotive linear drive according to one or more of the preceding Claims 1 to 33, **characterized in that** the worm gear (28) is in the form of a plastic moulding which is integral with the bearing seat and the internal thread.

37. Electromotive linear drive according to one or more of the preceding Claims 1 to 36, **characterized in that** the linear drive is in the form of a non-self-locking drive, and **in that** the linear drive is equipped with a braking element, which acts in one movement direction of the spindle (29), for holding the load when the drive motor is switched off.

38. Electromotive linear drive according to Claim 37, **characterized in that** the braking element is in the form of a spring braking element which is equipped with a plurality of turns, and **in that** one end of one turn is fixed in the sleeve of the gearbox bracket, and **in that**, otherwise, the spring braking element is arranged in an annular gap between the sleeve and the bearing seat.

39. Electromotive linear drive according to one or more of the preceding Claims 1 to 38, **characterized in that** the spindle (21) is composed of steel, and **in that** the free end which faces away from the worm gear (28) acts on a sliding piece which is guided in the housing.

40. Electromotive linear drive according to Claim 39, **characterized in that** the free end surface of the spindle facing away from the worm gear (28) is inclined at right angles to the centre longitudinal axis of the spindle, or with respect to the vertical, in the form of a pressure block (30), in order to form the contact surfaces with the articulation lever (15).

41. Electromotive linear drive according to one or more of the preceding Claims 1 to 40, **characterized in that** the housing halves (11a, 11b) are provided on the inside with fixing webs which are transverse with respect to the centre longitudinal axis of the spindle and against which the end surfaces of the sleeve of the gearbox bracket are supported.

42. Electromotive linear drive according to one or more of the preceding Claims 1 to 41, in which a pressure piece is placed on the spindle, **characterized in that** the pressure piece is in the form of a step on the side facing the articulation lever (15), thus producing a side, flat contact between the articulation lever (15) and the pressure piece.

43. Electromotive linear drive according to one or more of the preceding Claims 1 to 42, **characterized in that** the electromotive drive unit, together with the flange-connected gearbox bracket and the worm gear mounted therein and the roller bearing form an assembly unit, and **in that** this unit can be borne without the use of mechanical elements.

44. Electromotive linear drive according to one or more of the preceding Claims 1 to 43, **characterized in that** at least that area which is adjacent to the gearbox bracket to the housing (11) is filled with a sound insulating means.

45. Electromotive linear drive according to Claim 44, **characterized in that** the sound insulating means is in the form of a rubber element, or a rubber element which is sprayed onto the housing half and/or onto the gearbox bracket.

46. Electromotive linear drive according to one or more of the preceding Claims 1 to 45, **characterized in that** the housing is provided with two transport elements (23), which can be fixed in an interlocking and/or force-fitting manner to the housing, on the lower side, facing away from the recesses for the closer (16).

47. Electromotive linear drive according to Claim 46, **characterized in that** the transport elements (23) are provided with two aligned semicircular constrictions on the lower side, facing the wall of the housing.

48. Electromotive linear drive according to Claim 47, **characterized in that** the semicircular constrictions are integrally formed on the housing halves (11a, 11b).

49. Electromotive linear drive according to one or more of the preceding Claims 1 to 48, **characterized in that** a connecting element for an electrical power cable is provided on the housing (11), preferably on the exterior of the adjacent drive motor (12), **in that** a control board is arranged in the interior of the housing such that the internal area of the housing has no cables.

50. Electromotive linear drive according to Claim 49, **characterized in that** a control board with an electric component fitted to it for controlling at least one electric motor (12) is arranged in the interior of the housing (11) or of a formed-out area of the housing (11), or **in that** a printed circuit board is arranged as an electrical power distribution board in the interior of the housing, and splits and passes on the electric signals for control and power supply purposes.

51. Electromotive linear drive according to one or more of the preceding Claims 1 to 49, **characterized in that** the drive motor (12) and the connecting element for the electrical power supply are overlapped by a common cover cap.

52. Electromotive linear drive according to one or more of the preceding Claims 1 to 51, **characterized in that** the limit positions of the spindle (21) are limited by limit switches.

53. Electromotive linear drive according to one or more of the preceding Claims 1 to 52, **characterized in that** webs, pins or rails are integrally formed on the housing, for interlocking attachment of a control housing (33) or of an electrical power distribution unit.

54. Electromotive linear drive according to one or more of the preceding Claims 1 to 53, **characterized in that** the housing (11) has integrally formed webs and/or recesses for interlocking attachment of an electrical power cable or an electrical power distributor, or of a connecting plug for passing on the electrical power.

55. Electromotive linear drive according to one or more of the preceding Claims 1 to 54, **characterized in that** the outer surface of the housing (11) has webs or the like for attachment of a manual operating apparatus.

56. Electromotive linear drive according to one or more of the preceding Claims 1 to 55, **characterized in that** pockets or webs for holding batteries for an emergency power supply are provided on the housing (11) or in the housing (11).

57. Electromotive linear drive according to one or more of the preceding Claims 1 to 56, **characterized in that** pockets or webs for holding power supply units, control units and assembly units such as transformers, DC voltage power supply units, manual switches, closers (16) are arranged on the housing (11), and **in that** these elements can be removed from the linear drive (10) after the linear drive (10) has been transported.

58. Electromotive linear drive according to one or more of the preceding Claims 1 to 57, **characterized in that** webs or pins are integrally formed on the housing (11) or in the housing (11) and fix a cable for cable strain relief, and **in that** curved attachments or formed-out areas are fitted to the housing (11) or in the housing (11), on which a cable is supported with a minimum permissible bending radius as cable kink protection.

59. Electromotive linear drive according to one or more of the preceding Claims 1 to 58, **characterized in that** webs or pins are integrally formed on the housing (11) or in the housing (11) and connect at least one connection, for example a motor connection (26), in a force-fitting or interlocking manner to the housing (11), or **in that** a securing element is fitted to these pins or webs such that a motor connection (26) can be fixed to the housing (11).

## Revendications

1. Unité d'entraînement linéaire à moteur électrique (10) pour des éléments mobiles d'un meuble, comportant un boîtier (11), dont les parois espacées sont munies d'évidements alignés destinés à recevoir l'axe d'un élément mobile du meuble, et comportant une fermeture (16), qui recouvre les évidements et qui, pour immobiliser l'axe (14), est fixée contre les bords correspondants des parois du boîtier, comportant un moteur d'entraînement (12) et un réducteur de vitesse (27, 28) couplé à celui-ci et muni d'un organe de sortie rotatif pour l'entraînement d'au moins un actionneur (29) à déplacement linéaire qui, pour transformer son mouvement linéaire en un mouvement de rotation de l'axe (14), agit sur un levier articulé (15) fixé à ce dernier, **caractérisée en ce que** l'organe de sortie du réducteur de vitesse (27, 28) est une roue dentée ou une roue hélicoïdale (28), qui est munie d'une forure taraudée centrée, et **en ce que** l'actionneur est une broche de réglage (29), qui est en prise avec la roue dentée ou roue hélicoïdale (28), est immobilisée en rotation et est mobile uniquement dans sa direction longitudinale et qui est en liaison active avec le levier articulé.

2. Unité d'entraînement linéaire à moteur électrique selon la revendication 1, **caractérisée en ce que** la fermeture (16) est apte à être déplacée dans la direction longitudinale de l'axe dans des guidages des parois du boîtier et, dans sa position finale, est reliée par conjugaison de forme avec les bords supérieurs des parois du boîtier.

3. Unité d'entraînement linéaire à moteur électrique selon la revendication 2, **caractérisée en ce que** dans chaque paroi du boîtier sont prévues au moins deux rainures à contre-dépouille et **en ce que** les rainures à contre-dépouille dans les parois du boîtier sont alignées l'une à l'autre.

4. Unité d'entraînement linéaire à moteur électrique selon la revendication 2 ou 3, **caractérisée en ce que** dans chaque paroi du boîtier, de part et d'autre des évidements alignés, sont prévues respectivement deux rainures, dont au moins celle orientée vers l'évidement est réalisée avec une contre-dépouille.

5. Unité d'entraînement linéaire à moteur électrique selon une ou plusieurs des revendications précédentes 2 à 4, **caractérisée en ce que** la fermeture (16) comporte des nervures de blocage (17 à 20) qui s'engagent dans les rainures des parois du boîtier.

6. Unité d'entraînement linéaire à moteur électrique selon la revendication 5, **caractérisée en ce que** les nervures de blocage (17 à 20) s'étendent depuis un côté longitudinal jusqu'au côté longitudinal opposé de la fermeture (16).

7. Unité d'entraînement linéaire à moteur électrique selon une ou plusieurs des revendications précédentes 2 à 6, **caractérisée en ce que** la fermeture (16), sur la face extérieure libre et/ou la face intérieure libre, est munie de nervures de renforcement orientées dans sa direction longitudinale.

8. Unité d'entraînement linéaire à moteur électrique selon une ou plusieurs des revendications précédentes 2 à 6, **caractérisée en ce que** la fermeture (16) comporte des parties formées sur celle-ci ou insérées dans celle-ci, lesquelles s'engagent par force et/ou par conjugaison de forme dans le boîtier (11) ou s'appliquent contre le boîtier (11).

9. Unité d'entraînement linéaire à moteur électrique selon la revendication 1, **caractérisée en ce que** le boîtier (11) réalisé en matière plastique est formé de deux moitiés (11a, 11 b), dont les surfaces de joint sont disposées transversalement à l'axe de rotation du moteur.

10. Unité d'entraînement linéaire à moteur électrique selon la revendication 9, **caractérisée en ce que** les surfaces de joint des moitiés (11a, 11 b) du boîtier sont conçues sous forme profilée, dentée ou similaire, et **en ce que** les surfaces de joint entrent en prise l'une dans l'autre.

11. Unité d'entraînement linéaire à moteur électrique selon une ou plusieurs des revendications précédentes 1 à 10, **caractérisée en ce que** les surfaces de joint des moitiés (11a, 11b) du boîtier comportent des tétons, nervures ou évidements annulaires, qui s'étendent concentriquement les uns aux autres et autour de vis de fixation, de telle sorte que lors du serrage des vis, ceux-ci s'engagent les uns dans les autres.

12. Unité d'entraînement linéaire à moteur électrique selon une ou plusieurs des revendications précédentes 1 à 11, **caractérisée en ce qu'**un renflement formant une arête de butée est formé à l'intérieur du boîtier (11), de telle sorte que l'engrenage ou un élément de l'engrenage peut être mis en appui pour empêcher tout déplacement sous l'effet de la force de gravité lors du mouvement de retour de l'élément raccordé du meuble.

13. Unité d'entraînement linéaire à moteur électrique selon la revendication 1, **caractérisée en ce que** les moitiés (11a, 11b) du boîtier sont renforcées par des fibres, de préférence des fibres de verre, afin de réduire l'épaisseur des parois.

14. Unité d'entraînement linéaire à moteur électrique selon la revendication 9, **caractérisée en ce que** le boîtier, sur le côté opposé au levier articulé (15), est muni d'un cache (11c) en matériau solide ou élastique, dans lequel est insérée la broche dans la position rentrée.

15. Unité d'entraînement linéaire à moteur électrique selon la revendication 2, **caractérisée en ce que** le cache (11c) est encliqueté sur le boîtier (11) ou est vissé avec ce dernier, ou **en ce que** les moitiés (11 a, 11 b) du boîtier forment avec le cache (11 c) un élément moulé d'un seul tenant.

16. Unité d'entraînement linéaire à moteur électrique selon une ou plusieurs des revendications précédentes 8 à 15, **caractérisée en ce que** le boîtier (11), sur le côté orienté vers le moteur d'entraînement (12), est muni d'une ouverture ou d'une découpe pour former un support de couple.

17. Unité d'entraînement linéaire à moteur électrique selon la revendication 16, **caractérisée en ce que** la largeur de l'ouverture du support de couple (22) peut être modifiée par un élément ou par un mécanisme de fermeture, ou **en ce que** l'ouverture peut être masquée par une fermeture supplémentaire.

18. Unité d'entraînement linéaire à moteur électrique selon une ou plusieurs des revendications précédentes 9 à 17, **caractérisée en ce que** les moitiés (11a, 11b) du boîtier sont munies de nervures de renforcement qui s'entrecroisent.

19. Unité d'entraînement linéaire à moteur électrique selon la revendication 18, **caractérisée en ce que** les moitiés (11a, 11b) du boîtier sont planes et lisses à l'extérieur et **en ce que** les nervures de renforcement s'entrecroisant sont disposées sur le côté intérieur.

20. Unité d'entraînement linéaire à moteur électrique selon la revendication 18 ou 19, **caractérisée en ce que** les nervures de renforcement adjacentes aux évidements s'étendent concentriquement ou à peu près concentriquement aux évidements.

21. Unité d'entraînement linéaire à moteur électrique selon la revendication 18 ou 19, **caractérisée en ce que** la zone de mouvement du levier articulé (15) ne comporte pas de nervures de renforcement.

22. Unité d'entraînement linéaire à moteur électrique selon la revendication 1, **caractérisée en ce que** la broche (29) est réalisée en acier ou en matière plastique.

23. Unité d'entraînement linéaire à moteur électrique selon la revendication 22, **caractérisée en ce que** sur la zone d'extrémité de la broche, orientée vers le levier articulé (15), est posé de manière fixe un bloc de pression (30).

24. Unité d'entraînement linéaire à moteur électrique selon la revendication 23, **caractérisée en ce que** le bloc de pression (30) est réalisé en matière plastique et est muni d'un insert de renforcement métallique.

25. Unité d'entraînement linéaire à moteur électrique selon la revendication 23, **caractérisée en ce que** le bloc de pression (30) est réalisé en acier, et **en ce que** sur la face extérieure du bloc de pression en acier est posée une glissière en matière plastique qui est formée, de préférence, par deux coiffes en matière plastique posées latéralement sur le bloc de pression.

26. Unité d'entraînement linéaire à moteur électrique selon la revendication 20, **caractérisée en ce que** le bloc de pression (30) et la broche (29) sont assemblées par force, par conjugaison de forme ou par adhérence de matière ou forment une pièce moulée.

27. Unité d'entraînement linéaire à moteur électrique selon la revendication 24, **caractérisée en ce que** l'insert de renforcement métallique est disposé à l'intérieur du bloc en matière plastique ou du moins est posé sur le bloc en matière plastique sur le côté orienté vers le levier articulé.

28. Unité d'entraînement linéaire à moteur électrique selon une ou plusieurs des revendications précédentes 23 à 27, **caractérisée en ce que** le bloc de pression (30), l'insert de renforcement métallique du bloc de pression en matière plastique, une plaque posée sur une broche en acier ou l'extrémité frontale de la broche elle-même forme la surface de contact avec le levier articulé (15) et est disposé perpendiculairement à l'axe longitudinal médian de la broche ou avec un décalage en formant un angle avec la verticale.

29. Unité d'entraînement linéaire à moteur électrique selon la revendication 1, **caractérisée en ce que** le levier articulé (15) est coudé et est conçu sous la forme d'une pièce découpée dans un acier ou sous forme de pièce moulée en acier avec des flancs latéraux plans et parallèles.

30. Unité d'entraînement linéaire à moteur électrique selon la revendication 29, **caractérisée en ce que** la surface du levier articulé (15), orientée vers le bloc de pression (30), est courbe ou semi-sphérique.

31. Unité d'entraînement linéaire à moteur électrique selon la revendication 1, **caractérisée en ce que** le montage de la roue hélicoïdale (28) est assuré par un palier à roulements et un coude de transmission réalisé sous la forme d'une pièce moulée.

32. Unité d'entraînement linéaire à moteur électrique selon la revendication 31, **caractérisée en ce que** le coude de transmission est formé par un manchon destiné à recevoir le palier à roulements et par une bride de fixation destinée à être fixée sur le boîtier du moteur d'entraînement (12).

33. Unité d'entraînement linéaire à moteur électrique selon la revendication 31 ou 32, **caractérisée en ce que** le coude de transmission est réalisé en matière plastique et est renforcé par des fibres, de préférence des fibres de verre.

34. Unité d'entraînement linéaire à moteur électrique selon une ou plusieurs des revendications précédentes 1 à 33, **caractérisée en ce que** la roue hélicoïdale (28) est réalisée en deux parties et est formée par une couronne extérieure munie de la denture et par un manchon de support qui est muni d'un filetage intérieur et d'une portée extérieure pour le palier à roulements.

35. Unité d'entraînement linéaire à moteur électrique selon la revendication 34, **caractérisée en ce que** la couronne extérieure est assemblée avec le manchon de support par conjugaison de forme au moyen de languettes et rainures.

36. Unité d'entraînement linéaire à moteur électrique selon une ou plusieurs des revendications précédentes 1 à 33, **caractérisée en ce que** la roue hélicoïdale (28) avec la portée pour le palier et le filetage intérieur est réalisée en matière plastique sous la forme d'une pièce moulée d'un seul tenant.

37. Unité d'entraînement linéaire à moteur électrique selon une ou plusieurs des revendications précédentes 1 à 36, **caractérisée en ce que** l'unité d'entraînement linéaire est réalisée sous la forme d'un entraînement non autobloquant, et **en ce que** l'unité d'entraînement linéaire est équipée d'un élément de frein, qui agit dans le sens de mouvement de la broche (29) et qui est destiné à maintenir la charge lorsque le moteur d'entraînement est déconnecté.

38. Unité d'entraînement linéaire à moteur électrique selon la revendication 37, **caractérisée en ce que** l'élément de frein est réalisé sous la forme d'un élément de frein à ressort muni de plusieurs spires, et **en ce qu'**une extrémité d'une spire est fixée dans le manchon du coude de transmission et **en ce que**, pour le reste, l'élément de frein à ressort est disposé dans une fente annulaire entre le manchon et la portée pour le palier.

39. Unité d'entraînement linéaire à moteur électrique selon une ou plusieurs des revendications précédentes 1 à 38, **caractérisée en ce que** la broche (29) est réalisée en acier, et **en ce que** l'extrémité frontale libre, détournée de la roue hélicoïdale (28), agit sur un coulisseau guidé dans le boîtier.

40. Unité d'entraînement linéaire à moteur électrique selon la revendication 39, **caractérisée en ce que** la surface frontale libre, détournée de la roue hélicoïdale (28), de la broche sous la forme d'un bloc de pression (30) est inclinée perpendiculairement à l'axe longitudinal médian de la broche ou par rapport à la verticale pour former les surfaces de contact avec le levier articulé (15).

41. Unité d'entraînement linéaire à moteur électrique selon une ou plusieurs des revendications précédentes 1 à 40, **caractérisée en ce que** les moitiés (11a, 11b) du boîtier, sur leur face intérieure, sont munies de nervures de fixation disposées transversalement à l'axe longitudinal médian de la broche, contre lesquelles prennent appui les faces frontales du manchon du coude de transmission.

42. Unité d'entraînement linéaire à moteur électrique selon une ou plusieurs des revendications précédentes 1 à 41, dans laquelle un élément de pression est posé sur la broche, **caractérisée en ce que** l'élément de pression est réalisé en gradins sur le côté orienté vers le levier articulé (15), de telle sorte qu'il se forme un contact latéral plan entre le levier articulé (15) et l'élément de pression.

43. Unité d'entraînement linéaire à moteur électrique selon une ou plusieurs des revendications précédentes 1 à 42, **caractérisée en ce que** l'unité d'entraînement à moteur électrique avec le coude de transmission bridé contre celle-ci, ainsi qu'avec la roue hélicoïdale montée dans celle-ci et le palier à roulements forme une unité de montage, et **en ce que** ladite unité peut être montée sans utiliser des éléments mécaniques.

44. Unité d'entraînement linéaire à moteur électrique selon une ou plusieurs des revendications précédentes 1 à 43, **caractérisée en ce qu'**au moins la zone adjacente au coude de transmission est comblée, par rapport au boîtier (11), par un moyen d'isolation phonique.

45. Unité d'entraînement linéaire à moteur électrique selon la revendication 44, **caractérisée en ce que** le moyen d'isolation phonique est réalisé sous la forme d'un élément en caoutchouc ou d'un élément en caoutchouc moulé par injection sur les moitiés du boîtier et/ou sur le coude de transmission.

46. Unité d'entraînement linéaire à moteur électrique selon une ou plusieurs des revendications précédentes 1 à 45, **caractérisée en ce que** le boîtier, au niveau du côté inférieur détourné des évidements pour la fermeture (16), est muni de deux éléments de transport (23), propres à être fixés par conjugaison de forme et/ou par force contre le boîtier.

47. Unité d'entraînement linéaire à moteur électrique selon la revendication 46, **caractérisée en ce que** les éléments de transport (23), au niveau du côté inférieur détourné de la paroi du boîtier, sont munis de deux creux semi-sphériques alignés.

48. Unité d'entraînement linéaire à moteur électrique selon la revendication 47, **caractérisée en ce que** les creux semi-sphériques sont formés d'un seul tenant contre les moitiés (11a, 11b) du boîtier.

49. Unité d'entraînement linéaire à moteur électrique selon une ou plusieurs des revendications précédentes 1 à 48, **caractérisée en ce qu'**un élément de raccordement pour un câble électrique est prévu au niveau du boîtier (11), de préférence sur la face extérieure du moteur d'entraînement (12) adjacent, **en ce qu'**à l'intérieur du boîtier est agencée une platine de commande, de telle sorte que le volume intérieur du boîtier ne contient aucun câble.

50. Unité d'entraînement linéaire à moteur électrique selon la revendication 49, **caractérisée en ce qu'**une platine de commande, sur laquelle est monté un composant électrique destiné à commander au moins un moteur électrique (12), est disposée à l'intérieur du boîtier (11) ou d'une échancrure du boîtier (11), ou **en ce qu'**une plaquette de circuits imprimés formant une platine de distribution de courant est agencée à l'intérieur du boîtier, laquelle répartit et transmet les signaux électriques pour la commande et la fourniture du courant.

51. Unité d'entraînement linéaire à moteur électrique selon une ou plusieurs des revendications précédentes 1 à 49, **caractérisée en ce que** le moteur d'entraînement (12) et l'élément de raccordement pour la fourniture du courant électrique sont enserrés par le haut par un cache commun.

52. Unité d'entraînement linéaire à moteur électrique selon une ou plusieurs des revendications précédentes 1 à 51, **caractérisée en ce que** les positions finales de la broche (29) sont limitées par des commutateurs de fin de course.

53. Unité d'entraînement linéaire à moteur électrique selon une ou plusieurs des revendications précédentes 1 à 52, **caractérisée en ce que** sur le boîtier sont formés des nervures, des tétons ou des rails pour la fixation par conjugaison de forme d'un boîtier de commande (33) ou d'une unité de distribution du courant.

54. Unité d'entraînement linéaire à moteur électrique selon une ou plusieurs des revendications précédentes 1 à 53, **caractérisée en ce que** le boîtier (11) comporte des nervures formées contre celui-ci et/ou des évidements pour la fixation par conjugaison de forme d'un câble électrique ou d'un distributeur de courant ou d'une fiche de raccordement en vue de la transmission du courant.

55. Unité d'entraînement linéaire à moteur électrique selon une ou plusieurs des revendications précédentes 1 à 54, **caractérisée en ce que** la face extérieure du boîtier (11) comporte des nervures ou tout élément similaire pour la fixation d'un dispositif de commande manuel.

56. Unité d'entraînement linéaire à moteur électrique selon une ou plusieurs des revendications précédentes 1 à 55, **caractérisée en ce que** des poches ou des nervures destinées à recevoir des piles pour l'alimentation en courant de secours sont prévues sur le boîtier (11) ou dans le boîtier (11).

57. Unité d'entraînement linéaire à moteur électrique selon une ou plusieurs des revendications précédentes 1 à 56, **caractérisée en ce que** sur le boîtier (11) sont disposées des poches ou nervures destinées à recevoir des unités de fourniture d'énergie, des unités de commande et des unités de montage, telles que des transformateurs, des composants du réseau à tension continue, des commutateurs manuels, la fermeture (16), et **en ce que**, après le transport de l'unité d'entraînement linéaire (10), lesdits éléments peuvent être retirés de celle-ci.

58. Unité d'entraînement linéaire à moteur électrique selon une ou plusieurs des revendications précédentes 1 à 57, **caractérisée en ce que** sur le boîtier (11) ou dans le boîtier (11) sont formés des nervures ou des tétons, qui fixent un câble pour le délester de la sollicitation de traction, et **en ce que** sur le boîtier (11) ou dans le boîtier (11) sont disposées des saillies ou échancrures courbes, sur lesquelles prend appui un câble avec le plus petit rayon de flexion admissible de manière à former une protection contre une pliure du câble.

59. Unité d'entraînement linéaire à moteur électrique selon une ou plusieurs des revendications précédentes 1 à 58, **caractérisée en ce que** sur le boîtier (11) ou dans le boîtier (11) sont formés des nervures ou des tétons, par lesquels au moins un raccord, tel qu'un raccord de moteur (26), est assemblé par force ou par conjugaison de forme avec le boîtier (11), ou **en ce qu'**un élément d'immobilisation est disposé sur ces tétons ou nervures, de telle sorte qu'un raccord de moteur (26) peut être fixé contre le boîtier (11).
